# EUROPEAN PATENT APPLICATION

(11) **EP 4 632 652 A1**
(43) Date of publication of application: **15.10.2025**
(21) Application number: 25169992.2
(22) Date of filing: 11.04.2025
(51) Int. Cl.: G06Q 20/36, H04L 9/40, H04L 65/1069

(54) **DYNAMIC AUTHENTICATION SYSTEM AND PROTOCOL**

(30) Priority: 11.04.2024 US 202418633270
(71) Applicant: Cronos Group, 08007 Barcelona (ES); Levi, Dinor Adam Vestergaard, 08007 Barcelona (ES)
(72) Inventor: LEVI, Dinor Adam Vestergaard, 08007 Barcelona (ES)
(74) Representative: Finlayson, Scott Henry

(57) **Abstract**

Systems and methods are provided for performing dynamic authentication of network transactions.

## Description

### BACKGROUND OF THE DISCLOSURE

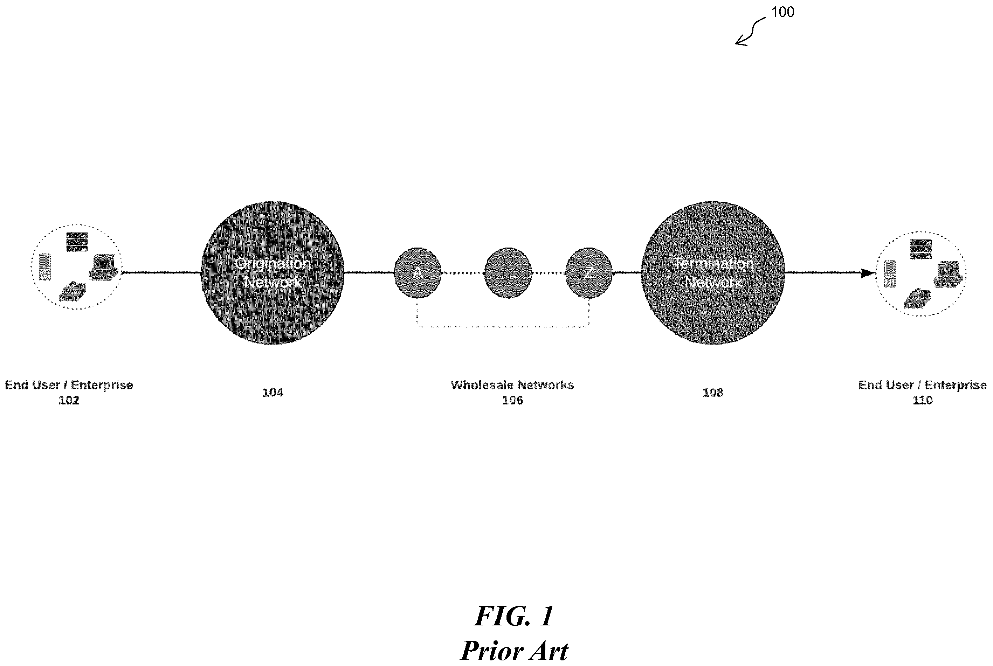

The telecommunications industry facilitates and operates with the transmission of numerous types of services (i.e., traffic), such as voice, messaging, video, and other types of digital mediums. To manage such traffic, the telecommunications industry generally utilizes a supply chain structure similar to or the same as the structure 100 shown in FIG. 1. For example, as an initial origination 102, a customer can request service for a phone call, video call or text messaging such as from a mobile phone, a computer, or other device known in the industry. Then, an origin operator network 104 (e.g., AT&T^{™}, Verizon^{™}, etc.) receives request for service delivery of the digital medium. Next, one or more intermediaries 106 (e.g., resellers) facilitate the transfer of the digital medium from the origin operator network 104 to a termination operator network 108 (e.g., an end supplier such as Telefonica Spain). Once the termination operator 108 receives the digital medium, it can deliver it to the destined end user: final destination 110. Similar to the initial origination 102, the final destination 110 can include various devices capable of receiving the digital medium (or other transmission), such as a mobile phone, landline, computer, etc.

### BRIEF DESCRIPTION OF THE FIGURES

FIG. 1 is a diagram of a typical telecommunications industry supply chain structure.
FIG. 2A and 2B are diagrams of example telecommunications industry supply chain structures that employ dynamic authentication system and protocol ("DASP") according to example embodiments of the present disclosure.
FIG. 3A is a flowchart of an example process of integrating a node into the system of FIGS. 2A and/or 2B according to example embodiments of the present disclosure.
FIG. 3B is a flowchart of an example process of setting up a node within the system of FIGS. 2A and/or 2B according to example embodiments of the present disclosure.
FIGS. 3C-3E are block diagrams of example blockchain node configurations according to example embodiments of the present disclosure.
FIG. 3F is a flowchart of an example process for implementing a hierarchical digital identity according to example embodiments of the present disclosure.
FIG. 4A is a flowchart of an example process for collecting of signaling data from any member from a same network according to example embodiments of the present disclosure.
FIG. 4B is a flowchart of an example process for a decentralized validation initiation request and dynamic propagation of such request by any network member according to example embodiments of the present disclosure.
FIG. 4C is a flowchart of an example process for a dynamic member participation to a validation initiation request upon match of required credentials of the request according to example embodiments of the present disclosure.
FIG. 4D is a flowchart of an example process for an initiating participant consolidating identifiers of all matching participants along with agreed-upon transmission credentials into a smart contract and posting on the blockchain, according to example embodiments of the present disclosure.
FIG. 4E is a flowchart of an example process where a transmission has a life cycle wherein active participants refresh transmission data according to example embodiments of the present disclosure.
FIG. 4F is an illustration of how the processes of FIGS. 4A-4B can be performed within the system of FIGS. 2A and/or 2B according to example embodiments of the present disclosure.
FIG. 4G is an illustration of how the process of FIG. 4C can be performed within the system of FIGS. 2A and/or 2B according to example embodiments of the present disclosure.
FIG. 4H is an illustration of how the process of FIG. 4D can be performed within the system of FIGS. 2A and/or 2B according to example embodiments of the present disclosure.
FIG. 4I is an illustration of how the process of FIG. 4E can be performed within the system of FIGS. 2A and/or 2B according to example embodiments of the present disclosure.
FIG. 4J is a flowchart of an example process for validating an end service provider according to example embodiments of the present disclosure.
FIG. 4K is a flowchart of an additional example process for validating an end service provider according to example embodiments of the present disclosure.
FIG. 4L is an example illustration of how the processes of FIGS. 4J and 4K are performed within the system of FIGS. 2A and/or 2B according to example embodiments of the present disclosure.
FIG. 5A is a flowchart of an example process for commencing service according to example embodiments of the present disclosure.
FIG. 5B is an example illustration of how the process of FIG. 5A is performed within the system of FIGS. 2A and/or 2B according to example embodiments of the present disclosure.
FIG. 5C is a flowchart of an additional example process for commencing service according to example embodiments of the present disclosure.
FIG. 5D is an example illustration of how the process of FIG. 5C is performed within the system of FIGS. 2A and/or 2B according to example embodiments of the present disclosure.
FIG. 6A is a flowchart of an example process for ending service from a final destination according to example embodiments of the present disclosure.
FIG. 6B is an example illustration of how the process of FIG. 6A is performed within the system of FIGS. 2A and/or 2B according to example embodiments of the present disclosure.
FIG. 6C is a flowchart of an additional example process for ending service from a final destination according to example embodiments of the present disclosure.
FIG. 6D is an example illustration of how the process of FIG. 6C is performed within the system of FIGS. 2A and/or 2B according to example embodiments of the present disclosure.
FIG. 7A is a flowchart of an example process for ending service according to example embodiments of the present disclosure.
FIG. 7B is an example illustration of how the process of FIG. 7A is performed within the system of FIGS. 2A and/or 2B according to example embodiments of the present disclosure.
FIGS. 7C-7D are flowcharts of additional example processes for ending service from a final destination according to example embodiments of the present disclosure.
FIG. 7E is an example illustration of how the processes of FIGS. 7C and 7D are performed within the system of FIGS. 2A and/or 2B according to example embodiments of the present disclosure.
FIG. 8A is a flowchart of an example process for verifying an origin identity according to example embodiments of the present disclosure.
FIG. 8B is an example illustration of how the process of FIG. 8A is performed within the system of FIGS. 2A and/or 2B according to example embodiments of the present disclosure.
FIGS. 8C-8D are flowcharts of additional example processes for verifying an origin identity according to example embodiments of the present disclosure.
FIG. 8E is an example illustration of how the processes of FIGS. 8C and 8D are performed within the system of FIGS. 2A and/or 2B according to example embodiments of the present disclosure.
FIG. 9A is a flowchart of an example process for an intermediary joining a contract according to example embodiments of the present disclosure.
FIGS. 9B-9D are example illustrations of how the process of FIG. 9A is performed within the system of FIGS. 2A and/or 2B according to example embodiments of the present disclosure.
FIG. 10 is an example server device that can be used within the system of FIGS. 2A and/or 2B according to an embodiment of the present disclosure.

### DESCRIPTION

The following detailed description is merely exemplary in nature and is not intended to limit the claimed invention or the applications of its use.

Industry deregulation, rapid technology innovation, and explosive market demand have triggered fierce competition in the telecommunications services marketplace, which has polarized the global supply chain. Exponential growth in the number of intermediaries (e.g., intermediaries 106 of FIG. 1) and transmission hops between the original service requestors (initial origination 102) and final service providers (termination operator 108) have bottlenecked transaction reconciliations and financial settlements. In addition, a shrinking profitability margin within the supply chain has escalated service hijacks, bypass, and identity fraud to excessive levels, costing enterprises and operators billions of dollars yearly.

Embodiments of the present disclosure therefore relate to systems and methods for identifying, tracking, and validating signaling transmission across a supply chain. The disclosed system utilizes hybrid blockchain technology and allows any entity within the supply chain (e.g., origin operators, resellers/intermediaries, or final service providers) to subscribe to a service that can deliver revenue assurance, fraud prevention, and service level verification within the supply chain. At least some embodiments described herein can use a blockchain network functioning as a decentralized digital ledger that records transactions across multiple computers in such a way that the registered transactions cannot be altered retroactively. This network may operate on a peer-to-peer basis, maintaining a continuous and unalterable chain of data blocks secured by cryptography. Each block may contain a timestamp and a link to the previous block, forming a chronological chain of data. Blockchain technology can enable a high level of security and transparency, as every participant in the network may have access to the entire database and its complete history. No single participant controls the data or the information, fostering a trustless environment conducive to transparent financial transactions, smart contracts, and decentralized applications, among others.

For example, the disclosed systems and methods can provide for the validation of the authenticity of an end-service provider chosen by a service requestor in real-time, which can eliminate false, fraudulent, or deteriorated service delivery. In addition, the disclosed systems and methods can provide for the validation of the authenticity of the service requestor by the end-service provider in real-time. This can eliminate false, manipulated, or fraudulent identities of service requestors. Further, the disclosed systems and methods can provide for the validation and reconciliation of transaction settlements throughout a supply chain in real-time, which can eliminate financial errors, latencies, and fraud. At least some disclosed systems and methods can employ a protocol for tracking, validating, and authenticating the credentials and integrity of a data transmission session as it passes through a supply chain, detecting any inferences or manipulations in the transmission's integrity and/or transactional discrepancies, in real time utilizing blockchain technology. The disclosed system can achieve such benefits by deploying (either on the cloud, physically on premises, or hosted) a blockchain application programming interface node (referred to as a "blockchain API node" or just "blockchain node" herein) on any participant network within the supply chain (e.g., enterprises/end users, origin operators, resellers/intermediaries, or final service providers as shown under diagram entities in FIG. 1 (102, 104, 106, 108, 110)). As discussed in greater detail below, a blockchain API node may function as an interface within a blockchain network, enabling external applications to communicate with and access the blockchain's functionalities. A blockchain API node may act as a bridge between the blockchain and the outside world, allowing for the seamless exchange of information and transactions.

As described herein, when a transmission is initiated, relayed, or received by a network, the transmission credentials can be wrapped into a "validation request" smart contract and published to a blockchain node, while a HashID can be inserted into the transmission session initiation protocol (SIP) header and sent to either an origin or termination operator network. In at least some embodiments described herein, a smart contract may operate as a self-executing contract with terms of an agreement between two or more parties being directly written into lines of code. The code and the agreements contained therein exist across the distributed, decentralized blockchain network. Smart contracts can permit trusted transactions and agreements to be carried out among disparate, anonymous parties without the need for a central authority, legal system, or external enforcement mechanism. They render transactions traceable, transparent, and irreversible. At least some embodiments described herein may use a smart contract tender, which is a form of smart contract designed to facilitate the initial stages of a bidding or validation process within a blockchain network. A smart contract tender can outline the criteria and terms for participation in a specific transaction or series of transactions, inviting network participants to submit their interest or qualifications based on predefined conditions. Unlike traditional smart contracts that execute the terms of an agreement, a smart contract tender can serve as a call to action, soliciting responses from potential validators, bidders, or contributors before forming a final agreement.

To efficiently manage network resources and ensure the rapid dissemination of the tender, the initial distribution to all potential network nodes can occur off-chain. This approach may leverage existing network connections between participants and the blockchain API node, facilitating a swift and broad propagation throughout the network. This may ensure that all participating nodes handling the transmission, at any stage, can be included in the smart contract tender.

Upon each node's receipt of the smart contract tender, a respective node may review its own transmission records, aided by their signaling readers or oracles in at least some embodiments, to identify matches based on the tender's criteria. The nodes with matching credentials may automatically generate a response and may be dynamically included to the smart contract tender. This can ensure that every node involved in the transmission, regardless of its position in the flow, can join the validation process.

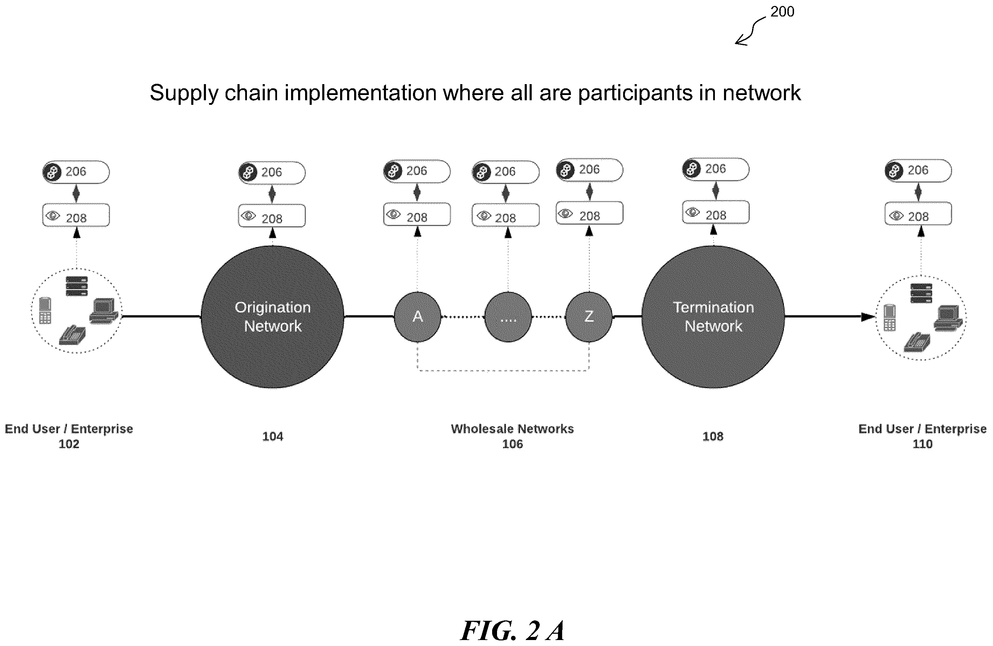

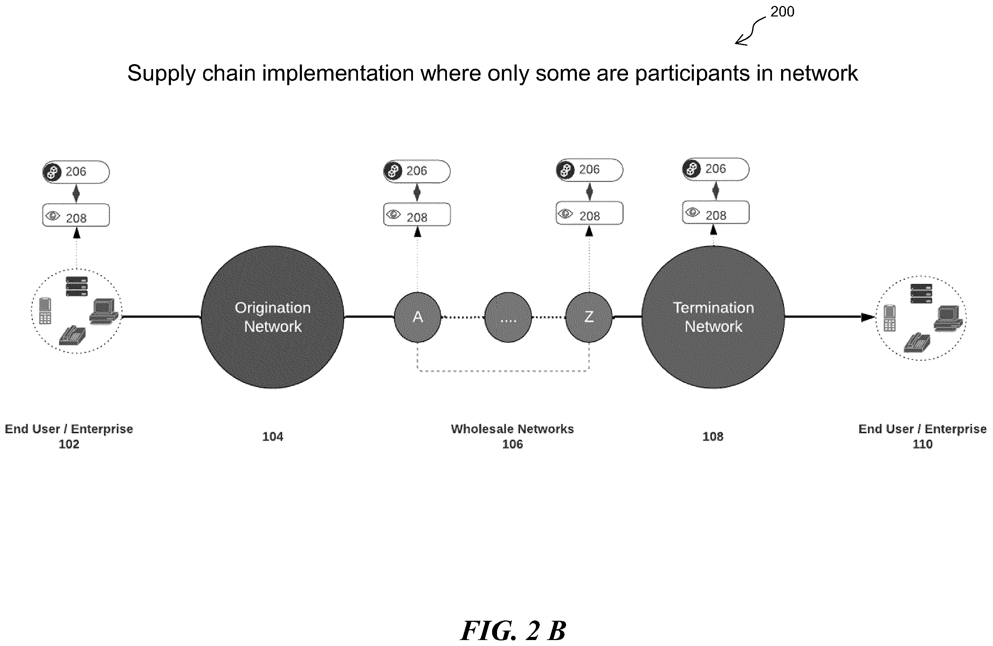

FIGS. 2A and 2B are diagrams of example telecommunications industry supply chain structures 200 that employ dynamic authentication system and protocol ("DASP") according to example embodiments of the present disclosure. In FIG. 2A, all nodes of the supply chain structure 200 employ DASP, whereas in FIG. 2B, only a subset of nodes of the supply chain structure 200 employ DASP. Structure 200 is similar to the system of structure 100 in that it also includes one or more initial originations 102 (herein referred to individually as an "initial origination 102" or collectively as "initial originations 102"), one or more intermediaries 106, and one or more final destinations 110 (herein referred to individually as a "final destination 110" or collectively as "final destinations 102"). The structure 200 also includes an origin operator network 202 and a termination operator network 204. Anyone within this supply chain can include the blockchain nodes described herein on its network.

In some embodiments, any entity within the supply chain (102, 104, 106, 108, 110) can include a blockchain node 206 and a signaling oracle 208. In some embodiments, the blockchain nodes and the signaling oracle can be deployed either in a cloud, on premises or hosted of the respective networks. In some embodiments, the signaling oracle 208 can be configured to gather signaling packets sent and received on a predefined port on a network. In some embodiments, the gathering can be performed in real-time. For example, signaling log collector can include signaling reader and signaling reader oracle components in some embodiments. A signaling reader may passively monitor and interpret signaling traffic within a telecommunications network. The signaling reader can continuously observe live signaling messages to detect and extract data for further processing. A signaling reader oracle can act as a bridge or intermediary, translating raw, off-chain signaling data into a format that can be utilized within the blockchain's on-chain environment. As a trusted entity, the signaling reader oracle can verify the accuracy and integrity of signaling data before it is used in blockchain transactions or to inform smart contract executions. This process can ensure that the data driving validation and authentication actions within the smart contracts is both accurate and tamper-proof. Consequently, the signaling reader oracle can facilitate smart contracts to execute based on live transmission events, thereby enhancing the trust and integrity of the entire system.

In some embodiments, the blockchain nodes 206 can include an application programming interface (API) that allows the system to interact with a blockchain platform configured to host or otherwise provide access to the blockchain. This can enable access to the data and functionality of a blockchain without having to build separate blockchain platforms. In addition, the blockchain nodes 206 can further include various applications and programs that operate and perform the disclosed methods. Further details about each component of structure 200, their operations, and their interactions are provided below in the context of the figures described below, for example.

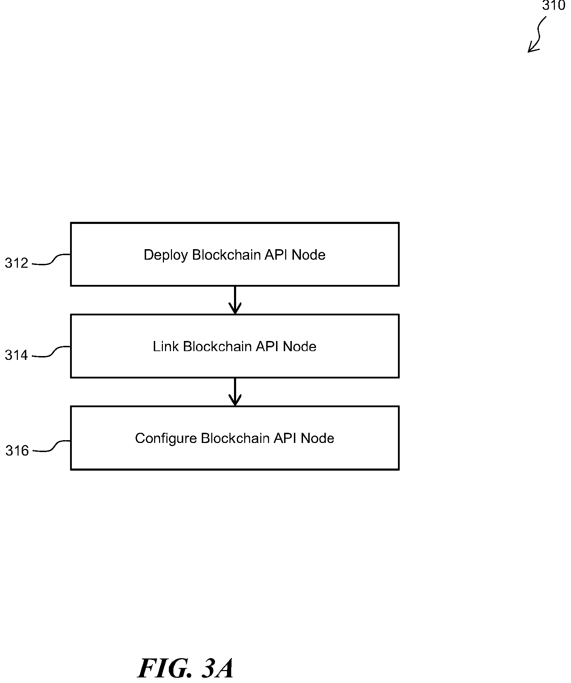

FIG. 3A is a flowchart of an example process 310 of connecting to DASP and integrating a node into the system of FIGS. 2A and/or 2B according to example embodiments of the present disclosure. Any participant network within the supply chain (e.g., Enterprises/end users, origin operators, resellers/intermediaries, or final service providers - as shown under diagram entities in FIG 1: 102, 104, 106, 108, 110), or one or more endpoints, may perform process 310 to facilitate participation in the above-described ecosystem, including formation and/or usage of smart contracts and/or verification of data transmissions, for example. The following example is described using a single intermediary 106 as the performing entity, but it will be understood that process 310 may proceed similarly for any other entities as shown under diagram entities in FIG 1: 102, 104, 106, 108, 110.

At block 312, intermediary 106 can deploy a blockchain API node. This flexible deployment can be achieved on-premises, in the cloud, or through a hosted solution, accommodating diverse IT infrastructures and ensuring universal access to the disclosed functionalities. The blockchain API node may be equipped with smart contract capabilities and processing logic, enabling intermediary 106 to engage directly with the blockchain for validation and authentication processes as described above. The blockchain API node may include the signaling reading oracle that may translate live transmission data into actionable insights within the blockchain environment.

In some embodiments, to deploy the blockchain API node, the intermediary 106 may first install node software. For example, the intermediary 106 may download and install the blockchain node software from a repository or other source. Next, the intermediary 106 may initiate software script, whereby the software can auto configure settings, API endpoints, and features and synch to blockchain. Next, the intermediary 106 may test and launch, wherein after synchronization is complete and security measures are in place, the intermediary 106 may test the node's functionality to ensure it can successfully connect to and interact with the blockchain. Once testing is successful, the node is ready to be launched into operation.

At block 314, intermediary 106 can link its blockchain API node with structure 200 and its blockchain. In some cases, this can include linking the signaling reading oracle with existing signaling infrastructure, thereby ensuring that live transmission records are made accessible for validation purposes without necessitating significant infrastructure changes. For example, many networks contain a signaling reader for quality monitoring, reporting, and other reasons. To enable the oracle to collect streaming information from the reader, intermediary 106 can enable and/or allow IP and port access to pull data from the reader or indicate an IP and port where to push the data to the oracle. In other cases, the linking may be performed in service of initially establishing a network structure 200.

Using a standardized signaling reader system, the blockchain systems and elements described herein may be integrated into participants' networks, providing a straightforward path to using the disclosed validation and authentication services. For example, the DVP system is a blockchain node, where the node may be a packaged application that contains the blockchain API node, the signaling oracle which prepares and selects what information to send to the API node for processing of contract, and a standby signaling reader which can be deployed should the network not have one available.

At block 316, intermediary 106 can configure its blockchain API node. Upon integration, participants can gain the ability to tailor which transmission streams they wish to subject to validation. This customization can be based on specific parameters such as destinations, origination points, times of day, clients, vendors, or encompass all transmissions, for example. In at least some embodiments, this happens through a secured application interface by the participants who can access and enter what information from the signaling reader is allowed to push to the oracle for processing of validation. The oracle can process all data received into a validation contract. Thus, by enabling data or restricting data feed to the oracle, intermediary 106 can control what is being validated and what is not. The active signaling reader can feed live transmission data to the oracle, enabling participants to dynamically select and adjust their validation preferences according to their operational needs and strategic goals.

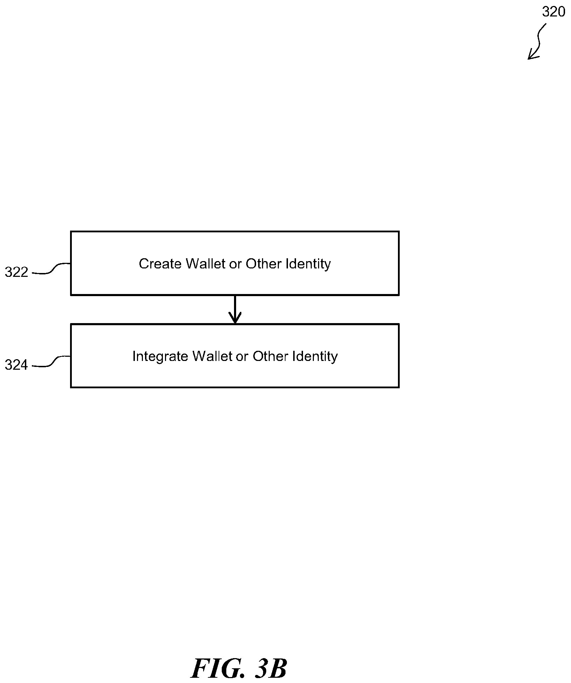

FIG. 3B is a flowchart of an example process 320 of setting up a node within the system of FIGS. 2A and/or 2B according to example embodiments of the present disclosure. After one or more intermediaries 106, or one or more endpoints, perform process 310, the one or more intermediaries 106 or endpoints may be registered with the ecosystem and gain access to the blockchain, for example. The following example is described using a single intermediary 106 as the entity being added to the system, but it will be understood that process 320 may proceed similarly for other entities.

At block 322, intermediary 106 can create a digital wallet or other identity. For example, a digital wallet may serve as a secure store for cryptographic keys and in executing transactions on the blockchain. The wallet address, a unique identifier derived from the participant's public key, may serve as an ID for intermediary 106 within the network. For example, the digital wallet may be a generic available application or custom application that may securely store the digital identity created on the specific blockchain network in the form of private keys, which can include cryptographic keys that prove ownership of blockchain assets and authority to conduct transactions on the network. The wallet can serve as an instrument and/or application layer to create the digital identity on the blockchain network.

As another example, some embodiments may use an Algorand Standard Asset (ASA) or other identifier to create the digital identity on the blockchain network. For example, some embodiments may use ASAs to create a hierarchical digital identity structure for participants. This approach may offer a flexible, scalable, and secure method of representing and managing each operator's identity within the blockchain ecosystem. An identifier such as an ASA can provide a tamper-proof representation of digital identities, ensuring data integrity and secure transactions within the blockchain. The hierarchical structure of ASAs may allow for granular management of digital identities, accommodating complex organizational structures and enabling seamless scalability. ASAs may further be centrally managed, allowing intermediaries and/or others to interact with the disclosed systems and methods without performing their own identity management, which can contribute to optimizing operational efficiency and reducing administrative overhead.

At block 324, the wallet address or other identity of intermediary 106 can be registered on the blockchain. Registration may include associating the wallet address or other identity with the node and oracle reader information of intermediary 106. This registration process can include verifying the participant's role in the telecommunications ecosystem (e.g., operator, wholesaler, enterprise) and capturing relevant operational details. For example, once the digital identity has been created on the blockchain, the identity can be entered into the blockchain node API of the participants. Thus, any transaction created out of the API note can include the identifier ID of the participants.

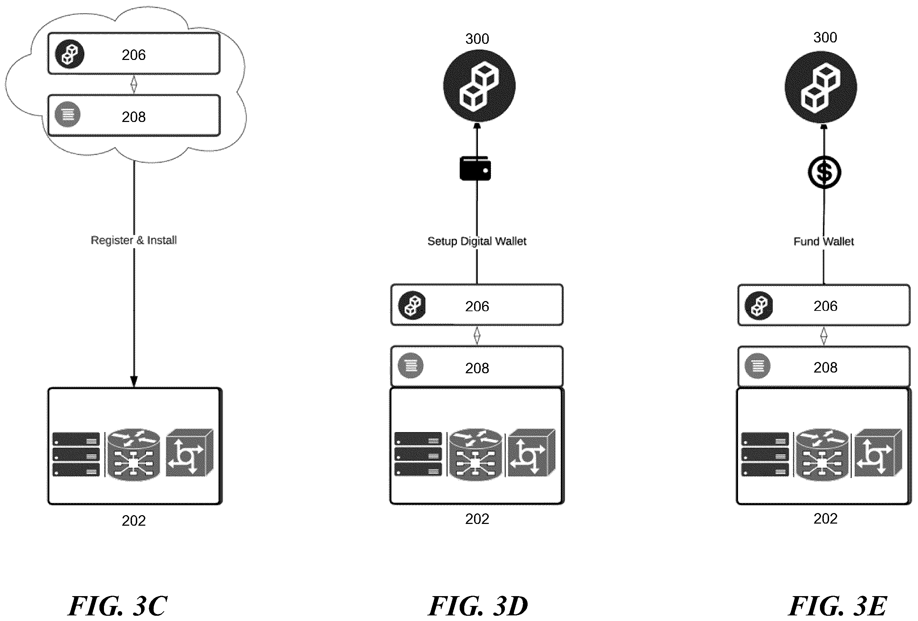

FIGS. 3C-3E are block diagrams of example blockchain node configurations according to example embodiments of the present disclosure, for example, blockchain and/or digital wallet configurations established through performing processes 310 and/or 320 as described above. FIGS. 3C-3E show a sequence of registering and/or installing in FIG. 3C, digital wallet setup in FIG. 3D, and digital wallet funding in FIG. 3E. First, in FIG. 3C, the blockchain node 206 and signaling log collector 208 are registered and installed to an origin operator network 202. In FIG. 3D, a digital wallet is setup between the blockchain node 206 and the blockchain 300. In some embodiments, the blockchain 300 can include the Algorand blockchain, although this is not limiting as many blockchain technologies could be interchanged to implement the embodiments described herein, such as Solana and Ethereum 2.0. In some embodiments, a digital wallet can also be referred to as an e-wallet. As described herein, a digital wallet can include any electronic device, online service, or software program that allows a party to make electronic transactions with another party while bartering digital currency units in exchange for goods and/or services. In addition, as described herein, a blockchain can refer to a shared, immutable ledger that facilitates the process of recording transactions and tracking the movement of tangible and intangible assets across a business network. FIG. 3E illustrates how links to funding the digital wallet from the blockchain node 206 can be configured. The diagrams in FIGS. 3C-3E also apply to setting up a blockchain node at a termination operator network 204 and/or other components of the supply chain as described above.

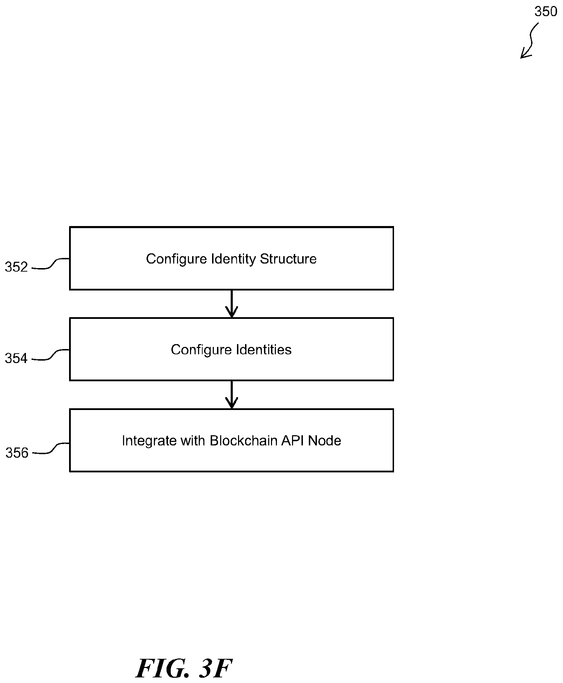

FIG. 3F is a flowchart of an example process 350 for implementing a hierarchical digital identity according to example embodiments of the present disclosure. Example process 350 is presented as a method of implementing ASA identities for use with the blockchain 300, but it will be appreciated that similar processing may be performed to configure other identifiers in similar fashion in other embodiments.

At block 352, one or more system 200 elements can configure an identity structure. This can include creating a master ASA for an operator, which can act as the primary digital identity on the Algorand (or other) blockchain. This ASA may be tailored to represent the operator within the system 200. This may also include defining the hierarchical structure of the system 200, mapping out divisions, networks, and any other entities that may require unique digital identities.

At block 354, one or more system 200 elements can configure one or more identities (e.g., ASAs). For example, based on the defined structure, sub-ASAs may be defined under the master ASA. Each sub-ASA may be configured to reflect its specific role and relationship within the operator's organizational hierarchy (e.g., associated with an individual node and configured to incorporate the properties and/or permissions of the node). For example, each ASA and sub-ASA may be set up with roles and permissions, ensuring that operational autonomy can be maintained while upholding security and governance standards. This may include configuring access controls and transaction permissions.

At block 356, one or more system 200 elements can integrate the identities (e.g., ASAs) with blockchain API node(s). For example, unique identifiers (IDs) of the master ASA and sub-ASAs may be securely integrated into the operator's blockchain API node. This may establish a direct link between the operator's digital identity and its blockchain transactions and interactions. With the digital identities established and integrated, the solution may be deployed into live operations. This can include final testing, validation, and training for the operator's team on managing and interacting with their new digital identities and/or ongoing support and management services. With the identities thus integrated, entities can perform validation and/or other operations as described herein.

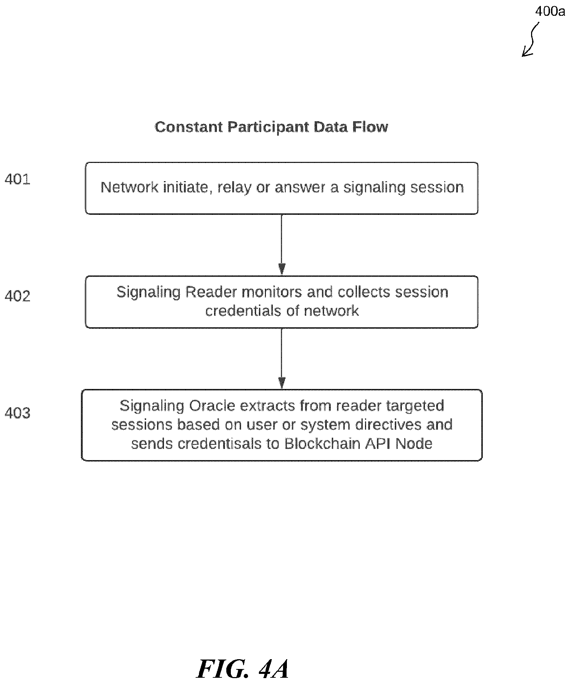

FIG. 4A is a flowchart of an example process 400a for collecting of signaling data from any member from a same network according to example embodiments of the present disclosure. At block 401, the network may continuously process signaling sessions such as, but not limited to, initiations, relays, answers, etc. At block 402, the signaling reader, which may be any element of network 200 as described above, may monitor and collect signaling data from the network. At block 403, whenever any element of network identifies the need to validate a specific transaction based on user or system preferences, its signaling oracle may obtain the targeted signaling session data from its associated signaling reader and may send credentials obtained therefrom to the blockchain API node.

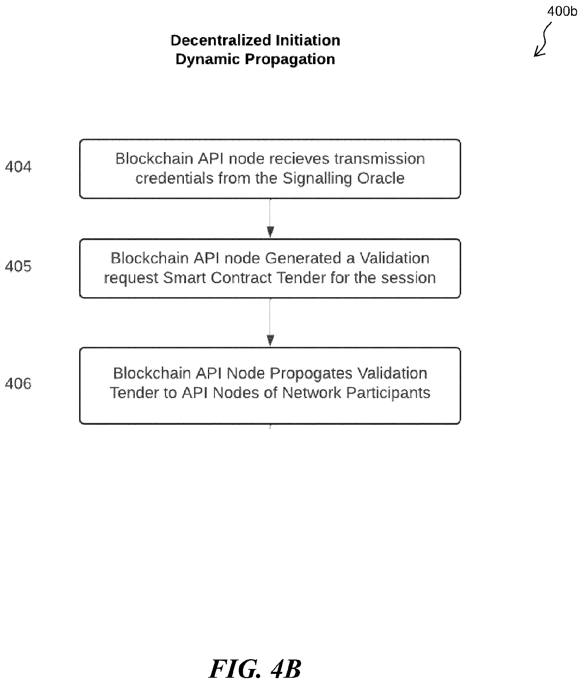

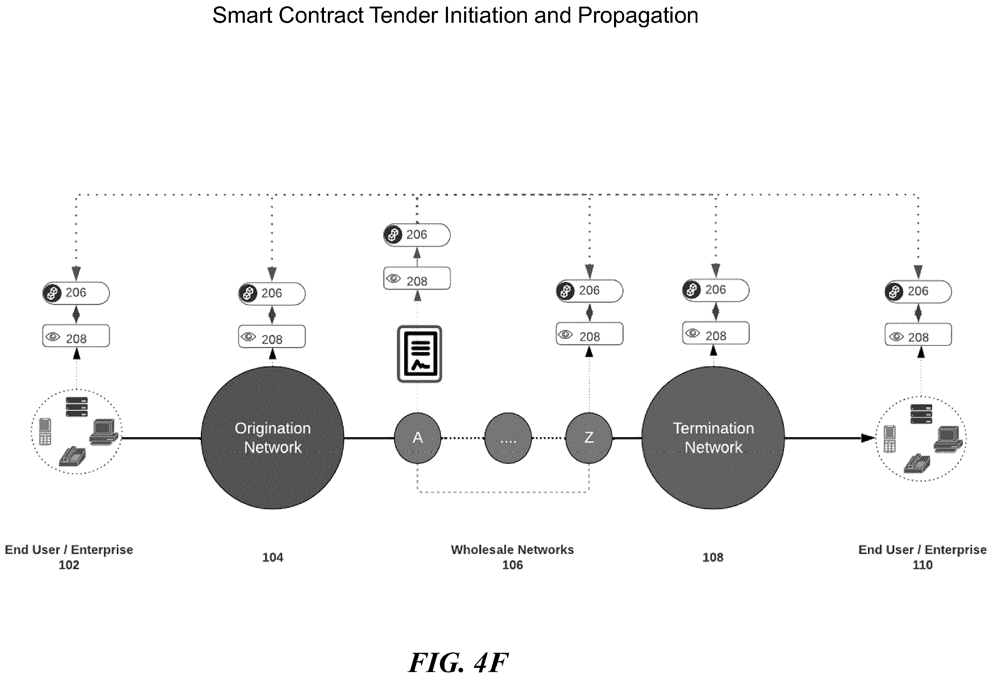

FIG. 4B is a flowchart of an example process 400b for a decentralized validation initiation request and dynamic propagation of such request by any network member according to example embodiments of the present disclosure. For example, process 400b can provide the benefits described herein during a voice call (or other transmission of media), where for example an end user / enterprise 102 may validate that its transmission has reached its final destination termination network 108, or the termination network 108 may validate that the credentials of the transmission received have not been manipulated throughout the supply chain, or any intermediary network 106 may validate that the duration of the transmission session they record on their network matches the ones recorded on the end user/ enterprise network 110 that answers the transmission. In accordance with the embodiments of the present disclosure, a single validation initiation can identify, track, and validate a transmission and all its credentials across the supply chain participants by and for any network member. FIG. 4F is an illustration of how the processes of FIGS. 4A-4B can be performed within the system of FIG. 2A according to example embodiments of the present disclosure.

At block 404, when any network node identifies the need for validation of a specific transmission, the process may be initialized. Utilizing the data available from their signaling oracle, the node initiating the process may gather transmission credentials which may include, but are not limited to, static identifiers as well as dynamic attributes and presence of any additional signaling information. At block 405, with the data collected, the blockchain node may construct a validation request, formulating it as a smart contract tender. This tender can outline the criteria for a node participation, detailing the required credentials that other network nodes must match to join the validation process.

The smart contract tender can specify both primary (mandatory) and secondary (optional) matching credentials. Primary credentials may be considered essential for any participant wishing to engage in the validation process, ensuring a basic level of matching across all responses. Secondary credentials may provide additional layers of validation, enhancing the robustness of the authentication process.

Taking from an example of a voice call, primary credentials could include the following:

| | |
|---|---|
| Destination Number: | +44 7873032XXX |
| Network Time Stamp: | DD/MM/YYY hh:mm:ss:ms UTC |
| Progress State: | Initiate |

- other primary credentials

Secondary credentials could include the following:

| | |
|---|---|
| Origin Number: | +1 212 555 1XXX |
| CALL ID IB: | 2c7ae17d-2597578b |

- other secondary credentials

As many types of traffic generally carry similar transmission fundamentals, voice calls are used herein as examples, but the disclosed principles are not limited to voice calls and are applicable to many types of transmitted media. For example, the disclosed embodiments can also be used for short message/messaging service (SMS) transmissions. As an example using SMS, Hashing of the SMS body content can be used as a primary matching criteria. A hashing function can be defined as a function that takes in plaintext data and turns it into undecipherable ciphertext. Thus, if a same body text is hashed by each node, the ciphertext format obtained by each node would be identical.

Primary credentials could include the following:

| | |
|---|---|
| Destination Number: | +44 7873032XXX |
| Network Time Stamp: | DD/MM/YYY hh:mm:ss:ms UTC |
| SMS Text HASH: | 938c2cc0dec05f2b68c4287040cfcf71 |

- other primary credentials

Secondary credentials could include the following:

| | |
|---|---|
| Origin Number: | +1 212 555 1XXX |

- other secondary credentials

At block 406, once the smart contract tender has been created, the tender may be fanned out to all existing network participants' blockchain API nodes. This can facilitate a swift and broad propagation throughout the network. This can ensure that all participating nodes handling the transmission, at any stage, are included in the smart contract tender.

Taking from an example of a voice call and above sample credentials, a smart contract tender could include the following:

| | |
|---|---|
| Tender Transaction ID: | E2KCT2YGGPFBPGUW5ISP4HDAUAR... |
| Initiating Member ID: | TAU7IM3HZQJIK2ZVZUFNW3H4TEAVV |
| Primary Credentials: | |
| .... | |
| Secondary Credentials: | |
| .... | |

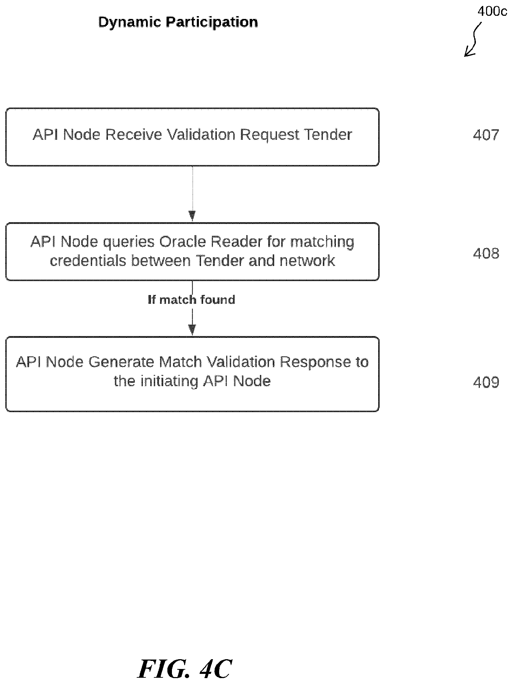

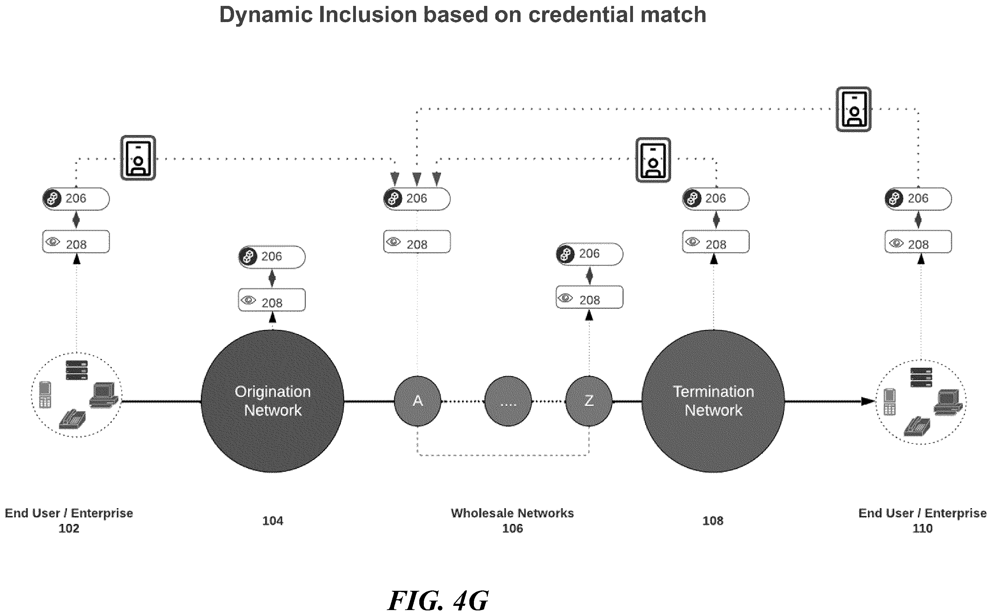

FIG. 4C is a flowchart of an example process 400c for a dynamic member participation to a validation initiation request upon match of required credentials of the request according to example embodiments of the present disclosure. At block 407, a node may receive the smart contract tender. At block 408, a participant's node can review its own transmission records (e.g., aided by their signaling readers or oracles) and identify matches based on the tender's criteria. At block 409, if the node has matching credentials, it may automatically generate a response and may be dynamically included to the smart contract tender, thereby ensuring that every node involved in the transmission, regardless of its position in the flow, can join the validation process. FIG. 4G is an illustration of how the process of FIG. 4C can be performed within the system of FIG. 2A according to example embodiments of the present disclosure.

An example of a response back to a tender by a member whose node has successfully matched the primary credential requirements of the smart contract tender may be as follows:

| | |
|---|---|
| Tender Transaction ID: | E2KCT2YGGPFBPGUW5ISP4HDAUAR... |
| Responding Member ID: | VV2ECR3BTYOID7Y7E5HCTBV6L |
| Network Time Stamp: | DD/MM/YYY hh:mm:ss:ms UTC |
| Secondary Credentials: | |

As the primary credentials may be required to match in order to participate and would be identical, only secondary credential details may be included in some embodiments in order to deliver further authentication level criteria from each responding participant. Secondary credentials may match or may differ from the initiating criteria, thereby indicating if transmission credentials have been manipulated when reaching a specific participant within the supply chain.

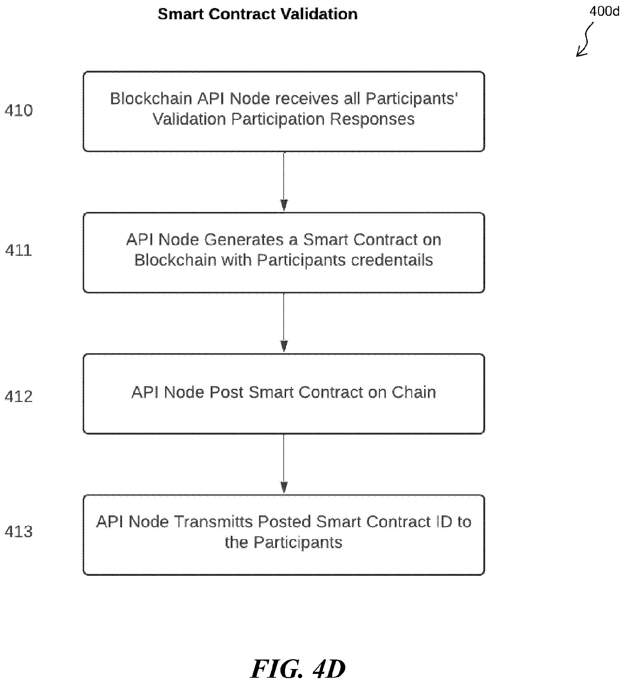

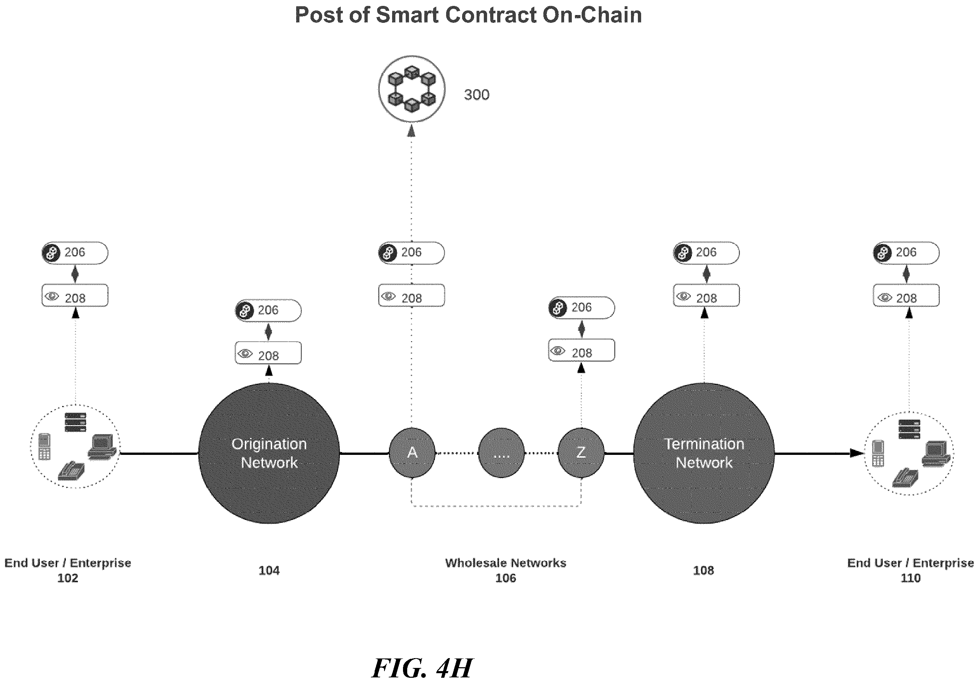

FIG. 4D is a flowchart of an example process 400d for an initiating participant consolidating identifiers of all matching participants along with agreed-upon transmission credentials into a smart contract and posting on the blockchain, according to example embodiments of the present disclosure. FIG. 4H is an illustration of how the process of FIG. 4D can be performed within the system of FIG. 2A according to example embodiments of the present disclosure.

At block 410, the initiating participant can gather responses. At block 411, the initiating participant can consolidate the identifiers of all matching participants along with the agreed-upon transmission credentials. At block 411, the initiating participant can place the consolidated data into a smart contract and, at block 412, post the smart contract on the blockchain. At block 413, the initiating participant can send transmission(s) to the active participants of the posted smart contract's identifying credentials on the blockchain, marking the transition from the tender phase to formal validation engagement among the identified network members. This posting captures the contract in an immutable ledger, ensuring transparency and security for all parties involved. The initiating participant can read the contents of the blockchain to determine that the active participants have responded and thereby validated the transaction of interest.

The structure and content within a smart contract posted to the blockchain could be as follows in some embodiments:

| | |
|---|---|
| Smart Contract ID: | e7dc18080110f8cc108elbe02bafaa5 |
| Tender ID: | E2KCT2YGGPFBPGUW5ISP4HDAUAR |
| Initiating Member ID: | TAU7IM3HZQJIK2ZVZUFNW3H4TEAVV |
| Participating Member IDs: | NW3H4TEAVVV2ECR3BTYOID7Y7E5HCT |
| | TAU7IM3HZQJIK2ZVZUFN2ECR3BTYOI |
| | PGUW5ISP4HDAUAR6D25EEUZ4C4 |

### Primary Credentials

| | |
|---|---|
| Destination Number: | +44 7873032XXX |
| Network Time Stamp: | DD/MM/YYY hh:mm:ss:ms UTC |
| Progress State: | Initiate |

- others primary credentials

Secondary Credentials:
   By: TAU7IM3HZQJIK2ZVZUFNW3H4TEAVV
Secondary Credentials
   ....
   ...
   By: NW3H4TEAVVV2ECR3BTYOID7Y7E5HCT
Secondary Credentials
   ....
   ...
   By: TAU7IM3HZQJIK2ZVZUFN2ECR3BTYOI
Secondary Credentials
   ....
   ...
   By: PGUW5ISP4HDAUAR6D25EEUZ4C4
Secondary Credentials

   ....
   ...

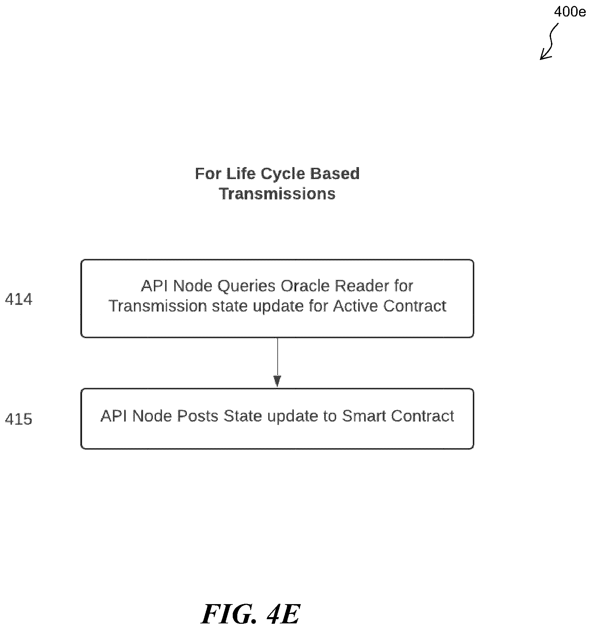

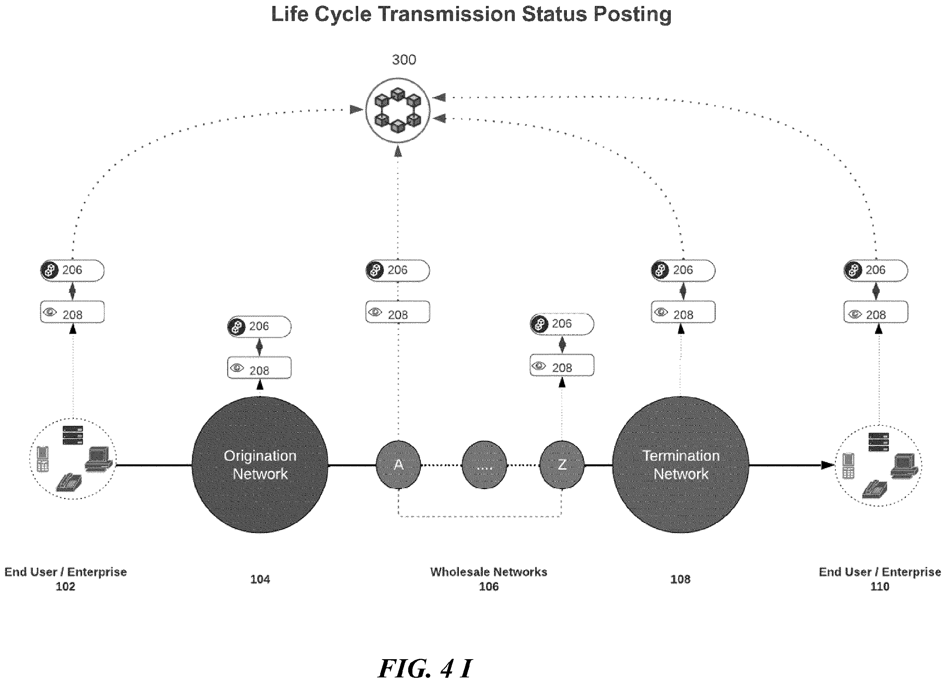

FIG. 4E is a flowchart of an example process 400e where a transmission has a life cycle wherein active participants refresh transmission data according to example embodiments of the present disclosure. For example, this process may be used for identifying, tracking, and validating a transmission and its credential authenticity within a supply chain, according to example embodiments of the present disclosure, for transmissions that are ongoing and have multiple stages (such as voice calls), wherein the smart contract is structured to accommodate updates that reflect the lifecycle events of the transmission. FIG. 4I is an illustration of how the process of FIG. 4E can be performed within the system of FIG. 2A according to example embodiments of the present disclosure.

At block 414, participants' signaling oracle(s) may capture event details related to the ongoing transmission that may be signed digitally by the respective participants to ensure authenticity and integrity. Participants can accumulate these signed events over a predetermined period or at specific transmission milestones. At block 415, participants can consolidate and post the collected events to the blockchain as part of the existing smart contract. The initiating participant can read the contents of the blockchain to determine that the active participants have updated their responses and thereby validated the ongoing transaction of interest.

An example of life cycle updates within, for example, a voice call in continuation to the above example may be as follows:

| | |
|---|---|
| Smart Contract ID: | e7dc18080110f8cc108elbe02bafaa5 |
| Tender ID: | E2KCT2YGGPFBPGUW5ISP4HDAUAR |
| Initiating/Participant Member ID: | TAU7IM3HZQJIK2ZVZUFNW3H4TEAVV |
| Network Time Stamp: | DD/MM/YYY hh:mm:ss:ms UTC |
| Progress State: | Connect |

In some embodiments, should any of the participating member observe a change in the secondary credentials during the lifecycle status change of the transaction occur, such member may include such details in its smart contract posting to the blockchain, for example as follows:
Secondary Credentials:
   By: TAU7IM3HZQJIK2ZVZUFNW3H4TEAVV
Secondary Credentials
   ....
   ...

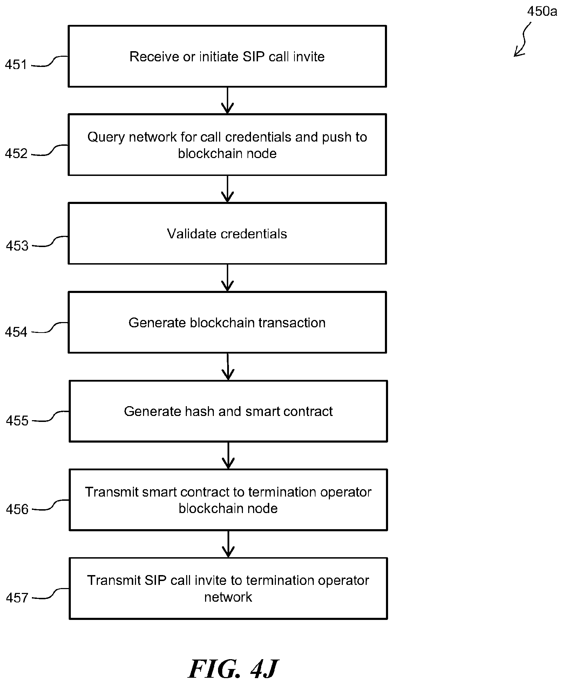

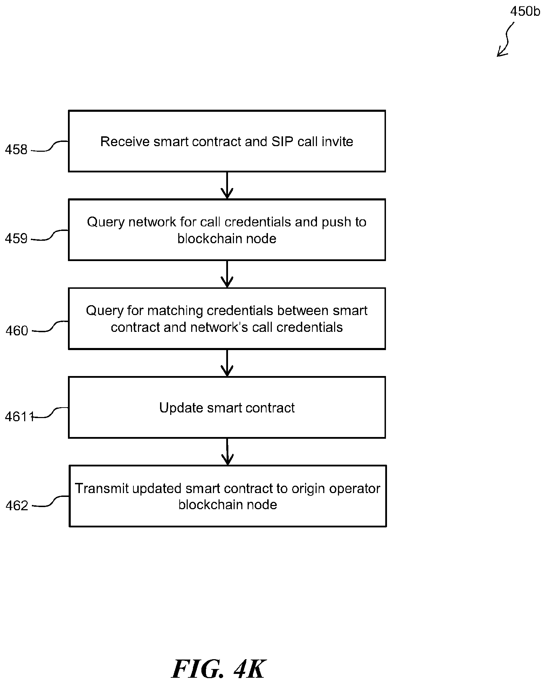

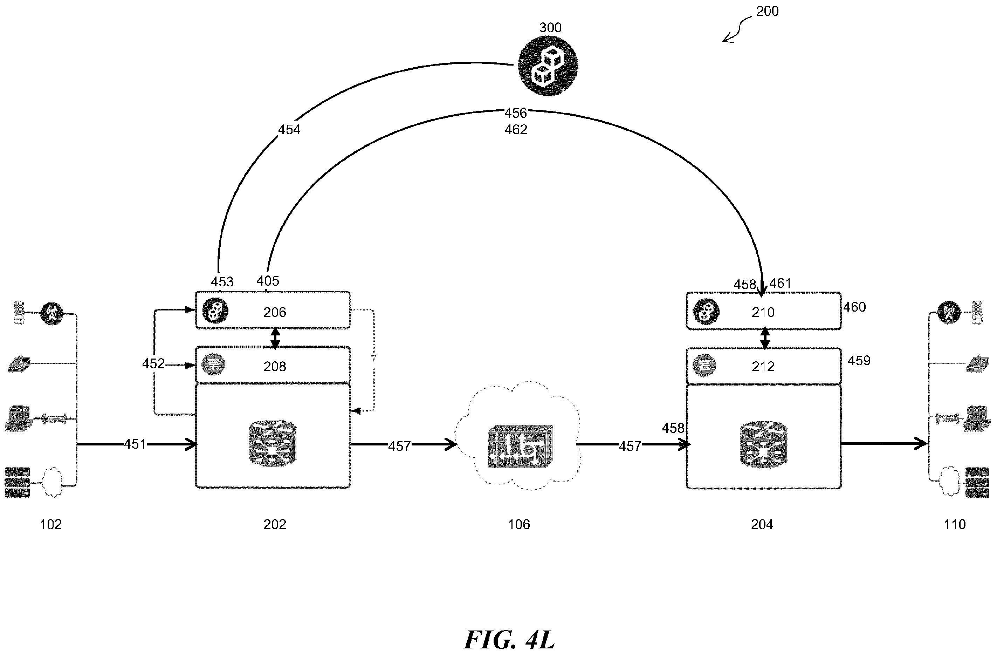

Some embodiments of the above-described processing may be used in combination with processing for validating end service providers. For example, FIG. 4J is a flowchart of an example process 450a for validating an end service provider, and FIG. 4K is a flowchart of an additional example process 450b for validating an end service provider. FIG. 4L is an example illustration of how the processes of FIGS. 4J and 4K are performed within the system of FIGS. 2A and/or 2B according to example embodiments of the present disclosure. Processes 450a and 450b are described in detail as follows, while FIG. 4L shows how the actions within processes 450a and 450b relate to the elements of structure 200. In some embodiments, FIGS. 4J-4L are applicable to both voice messages and SMS messages. In the case of SMS transmissions, the SMS is sent and the smart contract is generated for receipt confirmation. In addition, the steps that refer to a Call HashID may only be applicable to voice transmissions.

FIG. 4J is a flowchart of an example process 450a for validating an end service provider according to example embodiments of the present disclosure. For example, process 450a can provide the benefits described herein during a phone call (or other transmission of media) by validating an end service provider, such as the provider associated with the terminator operator network 204. At block 451, the origin operator network 202 can receive or initiate an SIP call invite (generally referred to herein as a "transmission invite") from an initial origination 102. In the depicted example, the call is a SIP call, but it will be understood that other types of communications using other messaging services and/or protocols may be attempted. For example, the dialed number could be "34 606 202 707," which is a Spanish phone number. It is important to note, however, that the disclosed process is not limited to dialing phone numbers of Spain and could be applied to a variety of types of phone numbers or other destination indicators (e.g., IP addresses, messaging service handles, etc.). At block 452, the signaling log collector 208 can query the origin operator network 202 for call credentials (generally referred to herein as "credentials," which are not limited to phone calls), such as the origin phone number, the destination number, the call state time stamp, etc. In addition, the signaling log collector 208 can push this data to the blockchain node 206. In some embodiments, if the origin operator network 202 has the requisite functionality, the origin operator network 202 could alternatively push this data to the blockchain node 206 directly.

At block 453, the blockchain node 206 can validate credentials associated with the SIP call invite. In some embodiments, the blockchain node 206 can validate the number dialed and identify the relevant termination operator networks (i.e., termination operator network 204). For example, the blockchain node 206 can validate that the dialed number is "34 606 202 707," that the destination country is Spain (i.e., 34=Spain), that the number assigned network is Movistar (i.e., 606=Movistar), and that the destination member ID (i.e., wallet ID associated with the termination operator network blockchain node 210) is
"YITAU7IM3HZQJIK2ZVZUFNW3H4TEAVVV2ECR3BTYOID7Y7ESHCTBV6LYHI." At block 454, the blockchain node 206 can generate a blockchain transaction for the call. In some embodiments, generating the blockchain transaction can include generating a blockchain transaction ID (i.e., TXN_ID) and linking the ID to the associated wallet ID. For example, the transaction ID could be
"FTFFNH46FBI4UCHD3CPJBCBIRLA5ECMNBQ3AM4LPSJIYUUOHROGQ" and the origin member wallet ID (i.e., wallet ID associated with the origin operator network blockchain node 206) is
"W4SJ7NE7UEYBKNPNVNHKVNNEPPVOWNQMN2EVICBR5POGV4OPZEU4JQHL5LY. " At block 455, the blockchain node 206 may generate a hash and a smart contract (also referred to as a signature request contract). In some embodiments, the blockchain node 206 can generate a Call HashID based on the dialed number (e.g., 34 606 202 707) and the number of the original caller (e.g., 1 202 555 1212). An example Hashed Call ID could be
"b2b2ab0b45a107bbdeadfc52d66fea736f13bb7d885910407ed4c983e3aa0512." In some embodiments, the smart contract can operate as a validation tool that validates the identity of the requester through a wallet ID signature. An example smart contract that can be generated by the blockchain node 206 is shown below in Table 1:

**Table 1**

| | |
|---|---|
| Transaction ID | FTFFNH46FBI4UCHD3CPJBCBIRLA5ECMNBQ3AM4LPSJIYUUOHROGQ |
| Call Hash ID | b2b2ab0b45a107bbdea4fc52d66fea736f13bb7d885910407ed4c983e3aa0512 |
| Origin Member ID | W4SJ7NE7UEYBKMWVNHKVNNEPPVOWNQMN2EVICBR5POGV4OPZEU4JQHL5LY |
| Destination Member ID | YITAU7IM3HZQJIK2ZVZUFNW3H4TEAVVV2ECR3BTYOID7Y7E5HCTBV6LYHI |
| Invite Request SIP Timestamp | DD/MM/YYY hh:mm:ss UTC |
| SIP Call ID - OB (*) | Ez8zrLmfzJXyCO-LNL6aoCo |
| Invite Request signee | W4SJ7NE7UEYBKMWVNHKVNNEPPVOWNQMN2EVICBR5POGV4OPZEU4JQHL5LY |
| Verification Type | (Option - Invite or Connect) |

At block 456, the blockchain node 206 may transmit the smart contract to the blockchain node 210, which may be connected to the termination operator network 204. In some embodiments, the transmission of the smart contract from the blockchain node 206 to the blockchain node 210 is performed "out of band." In other words, the transmission does not go through any of the intermediaries 106. In some embodiments, if the origin operator network 202 has the requisite functionality, the origin operator network 202 can request the Call HashID (generated at block 455) from the blockchain node 206 and insert it into the SIP header of the call invite. As a person of ordinary skill in the art will understand, insertion of a Call HashID into a SIP header is not performed for communications that do not use SIP headers, such as SMS communications. At block 457, the origin operator network 202 may transmit the SIP call invite to the termination operator network 204, traversing any intermediary networks.

FIG. 4K is a flowchart of an additional example process 450b for validating an end service provider according to example embodiments of the present disclosure. At block 458, the blockchain 210 may receive the smart contract from the blockchain node 206, and the termination operator network 204 may receive the SIP call invite from the origin operator network 202. At block 459, signaling log collector 212 may query the call credentials on the termination operator network 204 and push this data to the blockchain node 210. In some embodiments, the call credentials here can include the same information as discussed in relation to block 452 in process 450a. In some embodiments, if the termination operator network 204 includes the requisite functionality, it can push the call credentials directly to the blockchain node 210. At block 460, the blockchain node 210 may query for matching credentials between the received smart contract and the call credentials queried at block 459. In some embodiments, this can include one or more verification layers. For example, a first verification layer can include inserting the Call HashID into the SIP header. If the Call HashID is not present, a second verification layer can include verifying the SIP Call ID. In addition, a third verification layer can include the blockchain node 210 hashing the received dialed and origin numbers on the termination operator network 204 and matching the hash to the Call HashID and the specific call state timestamp of the smart contract. Layers relying on data in the SIP header can be omitted or used within other layers (as may be permitted by the specific digital medium implementation) when verifying data associated with messages that do not use SIP headers, such as SMS messages, as a person of ordinary skill in the art will appreciate.

At block 461, upon matching and validating credentials, the blockchain node 210 can update the smart contract with a Call Invite acknowledgment (ACK). An example of an updated smart contract is shown below in Table 2:

**Table 2**

| | |
|---|---|
| Transaction ID | FTFFNH46FBI4UCHD3CPJBCBIRLA5ECMNBQ3AM4LPSJIYUUOHROGQ |
| Call Hash ID | b2b2abOb45a107bbdea4fc52d66fea736f13bb7d885910407ed4c983e3aa0512 |
| Origin Member ID | W4SJ7NE7UEYBKMWVNHKVNNEPPVOWNQMN2EVICBR5POGV4OPZEU4JQHL5LY |
| Destination Member ID | YITAU7IM3HZQJIK2ZVZUFNW3H4TEAVVV2ECR3BTYOID7Y7E5HCTBV6LYHI |
| Invite Request SIP Timestamp | DD/MM/YYY hh:mm:ss UTC |
| SIP Call ID - OB | Ez8zrLmfzJXyCO-LNL6aoCo |
| Invite Request signee | W4SJ7NE7UEYBKMWVNHKVNNEPPVOWNQMN2EVICBR5POGV4OPZEU4JQHL5LY |
| Verification Type | Option - Invite or Connect |
| Invite ACK SIP Timestamp | DD/MM/YYY hh:mm:ss UTC |
| SIP Call ID - IB | isbcrcpi2pbymaclztdtzzpbpmd2b6m6tzcp |
| Invite ACK signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |

In some embodiments, if no match is found within the transaction timer limit, as defined by the blockchain node 210, from the time the contract has been received, the blockchain node 210 can update the smart contract with a Failed ACK, an example of which is shown below in Table 3:

**Table 3**

| | |
|---|---|
| Invite ACK SIP Timestamp | 0 |
| SIP Call ID - IB | 0 |
| Invite ACK signee | YITAU7IM3HZQJIK2ZVZUFNW3H4TEAVVV2ECR3BTYOID7Y7E5HCTBV6LYHI |
| Verification Layer | 0 |

At block 462, the blockchain node 210 may transmit the updated smart contract to the blockchain node 206, which is part of the origin operator network 202. The blockchain node 206 can then validate the credentials of the updated smart contract. If validation fails, the blockchain node 206 can send a command to the origin operator network 202 to cancel the call and/or alter an administrative monitoring system. In some embodiments, if the original service request was for a call "invite" verification only, the blockchain node 206 can publish the smart contract on the blockchain 300 for signature validation and seal. In some embodiments, in the event of possible phone number portability, the blockchain node 206 can generate and send a separate smart contract to each eligible termination operator blockchain node 210 (i.e., when there is more than one termination operator). Here, only the blockchain nodes receiving the SIP Call Invite would be able to validate.

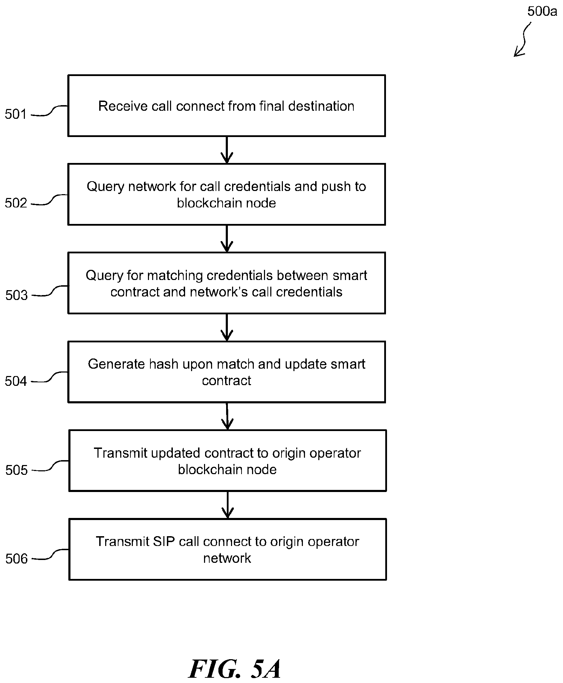

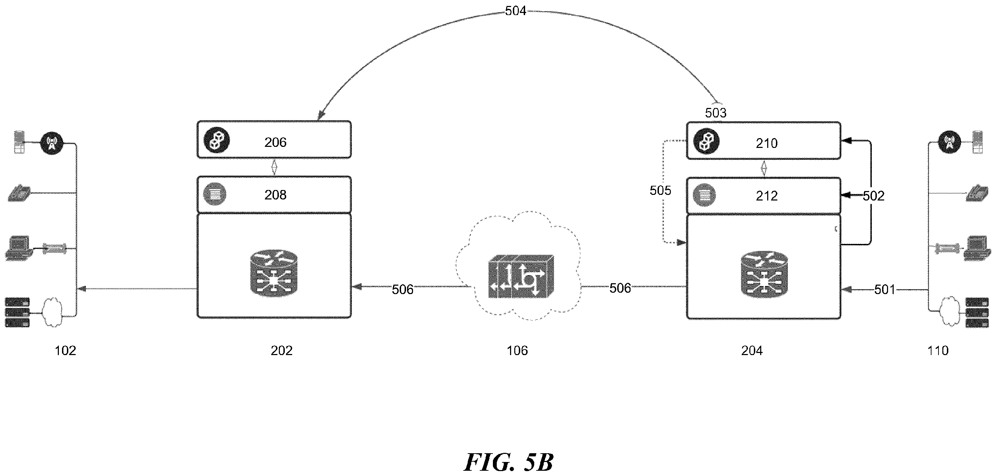

FIG. 5A is a flowchart of an example process 500a for commencing service according to example embodiments of the present disclosure. FIG. 5B is an example illustration of how process 500a of FIG. 5A is performed within the system of FIG. 2 according to example embodiments of the present disclosure.

At block 501 the termination operator network 204 may receive a "call connect" indication from a final destination 110. In some embodiments, the call connect indication can include SIP Call ID credentials. At block 502, the signaling log collector 212 may query the termination operator network 204 for call credentials and push this data to the blockchain node 210. In some embodiments, call credentials can include the origin phone number, the destination number, the call state time stamp, etc. In some embodiments, if the origin operator network 204 has the requisite functionality, the origin operator network 204 could alternatively push this data to the blockchain node 210 directly.

At block 503, the blockchain node 210 may query the SIP Call ID credentials of connected calls for a match with a smart contract. At block 504, upon detection of a match, the blockchain node 210 may generate a hash and update the matching smart contract of block 503. In some embodiments, generating the hash can include generating a Call Hash ID. In addition, the blockchain node 210 can update the smart contract with a Call Connect (SIP 200 OK). In some embodiments, SIP 200 OK can refer to a specific signaling message sent between networks when a connection occurs. However, the embodiments disclosed herein are not limited to utilizing SIP 200 OK and are applicable in a broader manner. An example of an updated smart contract is shown below in Table 4:

**Table 4.**

| | |
|---|---|
| Transaction ID | FTFFNH46FBI4UCHD3CPJBCBIRLA5ECMNBQ3AM4LPSJIYUUOHROGQ |
| Call Hash ID | b2b2abOb45a107bbdea4fc52d66fea736f13bb7d885910407ed4c983e3aa0512 |
| Origin Member ID | W4SJ7NE7UEYBKMWVNHKVNNEPPVOWNQMN2EVICBR5POGV4OPZEU4JQHL5LY |
| Destination Member ID | YITAU7IM3HZQJIK2ZVZUFNW3H4TEAVVV2ECR3BTYOID7Y7E5HCTBV6LYHI |
| Invite Request SIP Timestamp | DD/MM/YYY hh:mm:ss UTC |
| SIP Call ID - OB | Ez8zrLmfzJXyCO-LNL6aoCo |
| Invite Request signee | W4SJ7NE7UEYBKMWVNHKVNNEPPVOWNQMN2EVICBR5POGV4OPZEU4JQHL5LY |
| Verification Type | Option - Invite or Connect |
| Invite ACK SIP Timestamp | DD/MM/YYY hh:mm:ss UTC |
| SIP Call ID - IB | isbcrcpi2pbymaclztdtzzpbpmd2b6m6tzcp |
| Invite ACK signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Call Connect SIP Timestamp | DD/MM/YYY hh:mm:ss UTC |
| SIP Call ID - IB | isbcrcpi2pbymaclztdtzzpbpmd2b6m6tzcp |
| Call Connect signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |

At block 505, the blockchain node 210 may transmit the updated smart contract to the blockchain node 206 of the origin operator. In some embodiments, if the termination operator network 204 has the requisite functionality, it can request the HashID from the blockchain node 210 and insert the HashID into the SIP header. At block 506, the termination operator network 204 may transmit the SIP Call Connect (200 OK) to the origin operator network 202.

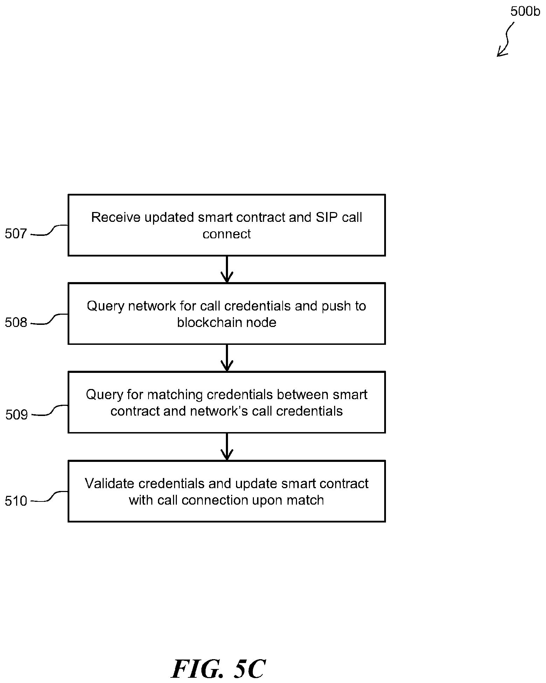

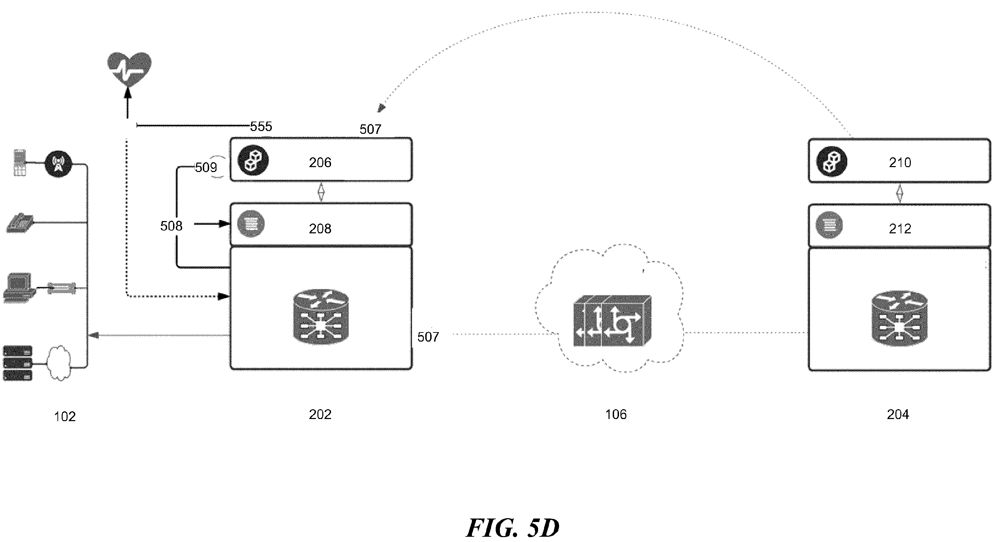

FIG. 5C is a flowchart of an additional example process 500b for commencing service according to example embodiments of the present disclosure. FIG. 5D is an example illustration of how process 500c of FIG. 5C is performed within the system of FIG. 2 according to example embodiments of the present disclosure.

At block 507, blockchain node 206 of the origin operator may receive the updated smart contract from the blockchain node 210. In addition, the origin operator network 202 may receive the SIP Call Connect (200 OK) from the termination operator network 204. At block 508, the signaling log collector 208 may query the origin operator network 202 for call credentials and push this data to the blockchain node 206. In some embodiments, if the origin operator network 202 has the requisite functionality, the origin operator network 202 could alternatively push this data to the blockchain node 206 directly.

At block 509, the blockchain node 206 may query for matching credentials between the received smart contract and the call credentials queried at block 508. In some embodiments, this can include one or more verification layers. For example, a first verification layer can include inserting the Call HashID into the SIP header matching the contract HashID. If the Call HashID is not present, a second verification layer can include recoding the SIP Call Ids at the call invite stage. In addition, a third verification layer can include the blockchain node 206 hashing the received dialed and origin numbers on the origin operator network 202 and matching the hash to the Call HashID and the specific call state timestamp of the smart contract. At block 510, upon detecting a match, the blockchain node 206 may validate the credentials and update the smart contract with a Call Connection ACK. An example of an updated smart contract is shown below in Table 5:

**Table 5**

| | |
|---|---|
| Transaction ID | FTFFNH46FBI4UCHD3CPJBCBIRLA5ECMNBQ3AM4LPSJIYUUOHROGQ |
| Call Hash ID | b2b2abOb45a107bbdea4fc52d66fea736f13bb7d885910407ed4c983e3aa0512 |
| Origin Member ID | W4SJ7NE7UEYBKMWVNHKVNNEPPVOWNQMN2EVICBR5POGV4OPZEU4JQHL5LY |
| Destination Member ID | YITAU7IM3HZQJIK2ZVZUFNW3H4TEAVVV2ECR3BTYOID7Y7E5HCTBV6LYHI |
| Invite Request SIP Timestamp | DD/MM/YYY hh:mm:ss UTC |
| SIP Call ID - OB | Ez8zrLmfzJXyCO-LN L6aoCo |
| Invite Request signee | W4SJ7NE7UEYBKMWVNHKVNNEPPVOWNQMN2EVICBR5POGV4OPZEU4JQHL5LY |
| Verification Type | Option - Invite or Connect |
| Invite ACK SIP Timestamp | DD/MM/YYY hh:mm:ss UTC |
| SIP Call ID - IB | isbcrcpi2pbymaclztdtzzpbpmd2b6m6tzcp |
| Invite ACK signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Call Connect SIP Timestamp | DD/MM/YYY hh:mm:ss UTC |
| SIP Call ID - IB | isbcrcpi2pbymaclztdtzzpbpmd2b6m6tzcp |
| Call Connect signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Call Connect ACK SIP Timestamp | DD/MM/YYY hh:mm:ss UTC |
| SIP Call ID - OB | Ez8zrLmfzJXyCO-LN L6aoCo |
| Call Connect ACK signee | W4SJ7NE7UEYBKMWVNHKVNNEPPVOWNQMN2EVICBR5POGV4OPZEU4JQHL5LY |
| Verification Layer | 1, 2, or 3 (Pending on the BC nodes credential verification type) |

In some embodiments, if validation fails, the blockchain node 206 can send a command to the origin operator network 202 to cancel the call and/or alert an administrative monitoring system 555.

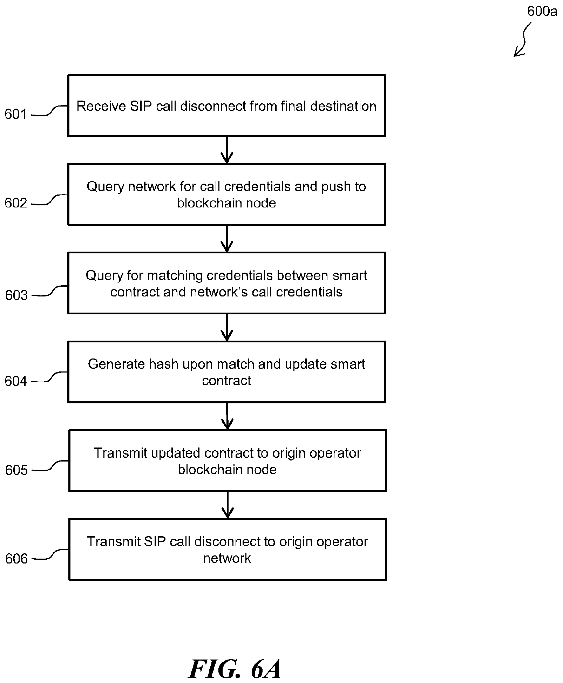

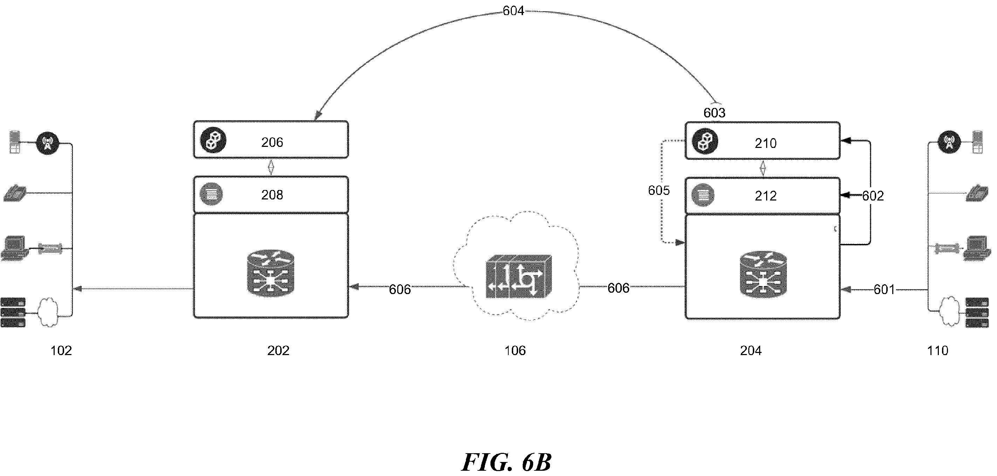

FIG. 6A is a flowchart of an example process 600a for ending service from a final destination according to example embodiments of the present disclosure. FIG. 6B is an example illustration of how process 600a of FIG. 6A is performed within the system of FIG. 2 according to example embodiments of the present disclosure.

At block 601, termination operator network 204 may receive an SIP call disconnect indication from a final destination 110. At block 602, the signaling log collector 212 may query the termination operator network 204 for call credentials and push this data to the blockchain node 210. In some embodiments, if the termination operator network 204 has the requisite functionality, the termination operator network 204 could alternatively push this data to the blockchain node 210 directly.

At block 603, the blockchain node 210 may query the SIP Call ID credentials of disconnected calls for a match with a smart contract. At block 604, upon detection of a match, the blockchain node 210 may generate a hash and update the matching smart contract. In some embodiments, generating the hash can include generating a Call HashID. In addition, the blockchain node 210 can update the smart contract with a call disconnect ACK. An example of an updated smart contract is shown below in Table 6:

**Table 6.**

| | |
|---|---|
| Transaction ID | FTFFNH46FBI4UCHD3CPJBCBIRLA5ECMNBQ3AM4LPSJIYUUOHROGQ |
| Call Hash ID | b2b2ab0b45a107bbdea4fc52d66fea736f13bb7d885910407ed4c983e3aa0512 |
| Origin Member ID | W4SJ7NE7UEYBKMWVNHKVNNEPPVOWNQMN2EVICBR5POGV4OPZEU4JQHL5LY |
| Destination Member ID | YITAU7IM3HZQJIK2ZVZUFNW3H4TEAVVV2ECR3BTYOID7Y7E5HCTBV6LYHI |
| Invite Request SIP Timestamp | DD/MM/YYY hh:mm:ss UTC |
| SIP Call ID - OB | Ez8zrLmfzJXyC0-LNL6aoCo |
| Invite Request signee | W4SJ7NE7UEYBKMWVNHKVNNEPPVOWNQMN2EVICBR5POGV4OPZEU4JQHL5LY |
| Verification Type | Option - Invite or Connect |
| Invite ACK SIP Timestamp | DD/MM/YYY hh:mm:ss UTC |
| SIP Call ID- IB | isbcrcpi2pbymaclztdtzzpbpmd2b6m6tzcp |
| Invite ACK signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Call Connect SIP Timestamp | DD/MM/YYY hh:mm:ss UTC |
| SIP Call ID - IB | isbcrcpi2pbymaclztdtzzpbpmd2b6m6tzcp |
| Call Connect signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Call Connect ACK SIP Timestamp | DD/MM/YYY hh:mm:ss UTC |
| SIP Call ID - OB | Ez8zrLmfzJXyC0-LNL6aoCo |
| Call Connect ACK signee | W4SJ7NE7UEYBKMWVNHKVNNEPPVOWNQMN2EVICBR5POGV4OPZEU4JQHL5LY |
| Verification Layer | 1, 2, or 3 (Pending on the BC nodes credential verification type) |
| Call Connect SIP Timestamp | DD/MM/YYY hh:mm:ss UTC |
| SIP Call ID - IB | isbcrcpi2pbymaclztdtzzpbpmd2b6m6tzcp |
| Call Disconnect signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |

At block 605, the blockchain node 210 may transmit the updated smart contract to the blockchain node 206 of the origin operator. In some embodiments, if the termination operator network 204 has the requisite functionality, it can request the HashID from the blockchain node 210 and insert it into the SIP header. At block 606, the termination operator network 204 may transmit an SIP call disconnect indication to the origin operator network 202.

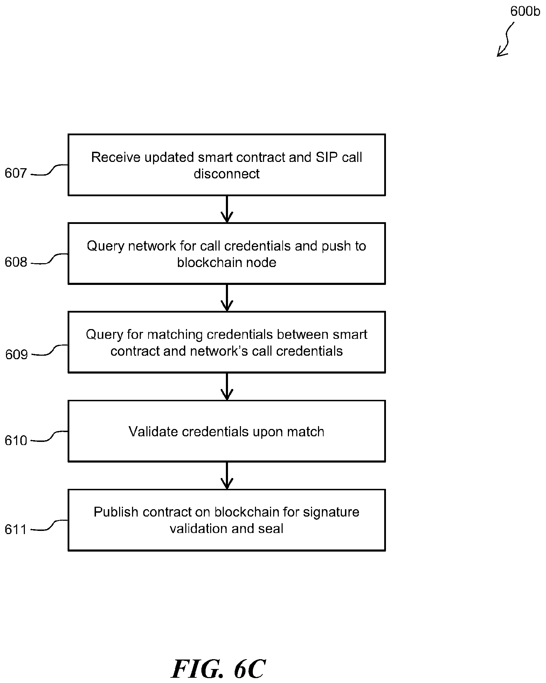

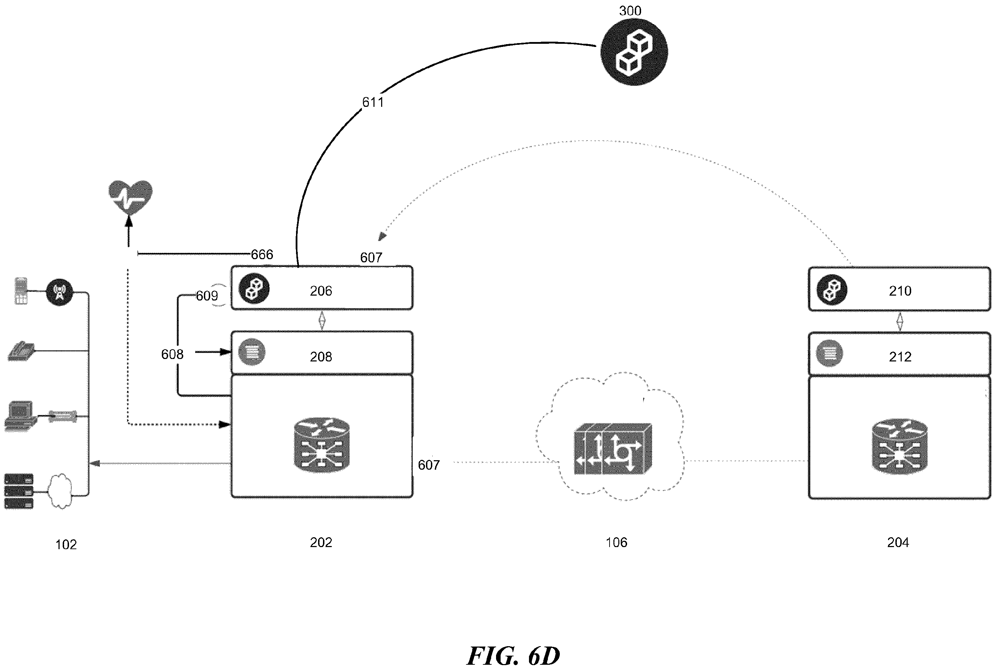

FIG. 6C is a flowchart of an additional example process 600b for ending service from a final destination according to example embodiments of the present disclosure. FIG. 6D is an example illustration of how the process of FIG. 6C is performed within the system of FIG. 2 according to example embodiments of the present disclosure. In some embodiments, FIGS. 6C-6D are applicable to both voice messages and SMS messages. In the case of SMS transmissions, there is an SMS receipt and the smart contract is used for confirmation of receipt. In addition, the steps that refer to a Call HashID may only be applicable to voice transmissions or used within other layers (as may be permitted by the specific digital medium implementation).

At block 607, the blockchain node 206 of the origin operator may receive the updated smart contract, and the origin operator network 202 may receive the SIP call disconnect indication. At block 608, the signaling log collection 208 may query the origin operator network 202 for call credentials and push the data to the blockchain node 206. In some embodiments, if the origin operator network 202 has the requisite functionality, the origin operator network 202 could alternatively push this data to the blockchain node 206 directly.

At block 609, the blockchain node 206 may query for matching credentials between the smart contract and the call credentials at the origin operator network 202. In some embodiments, this can include one or more verification layers. For example, a first verification layer can include inserting the Call HashID into the SIP header. If the Call HashID is not present, a second verification layer can include recoding SIP call IDs at the call invite stage. In addition, a third verification layer can include the blockchain node 206 hashing the received dialed and origin numbers on the origin operator network 202 and matching the hash to the Call HashID and the specific call state timestamp of the smart contract. Layers relying on data in the SIP header can be omitted or used within other layers (as may be permitted by the specific digital medium implementation) when verifying data associated with messages that do not use SIP headers, such as SMS messages, as a person of ordinary skill in the art will appreciate. At block 610, upon detecting a match, the blockchain node 206 may validate the credentials. In some embodiments, if validation fails or the smart contract has not been received, the blockchain node 206 can command the origin operator network 202 to cancel the call and/or alert an administrative monitoring system 666. At block 611, the blockchain node 206 can publish the smart contract on the blockchain 300 for signature validation and seal.

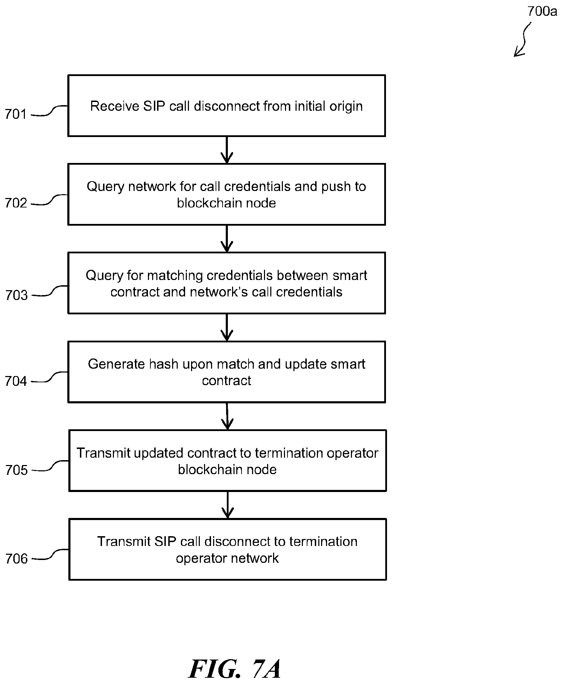

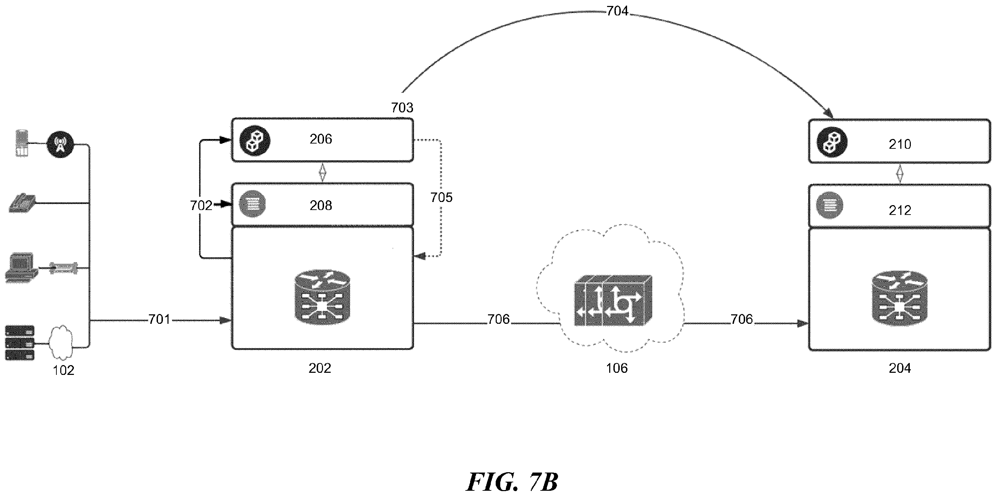

FIG. 7A is a flowchart of an example process 700a for ending service according to example embodiments of the present disclosure. FIG. 7B is an example illustration of how process 700a of FIG. 7A is performed within the system of FIG. 2 according to example embodiments of the present disclosure.

At block 701, the origin operator network 202 may receive an SIP call disconnect indication from an initial origination 102. At block 702, the signaling log collector 208 may query the origin operator network 202 for call credentials and push this data to the blockchain node 206. In some embodiments, if the origin operator network 202 has the requisite functionality, the origin operator network 202 could alternatively push this data to the blockchain node 206 directly. At block 703, the blockchain node 206 may query the SIP Call ID credentials of disconnected calls for a match with a smart contract. At block 704, upon detection of a match, the blockchain node 206 may generate a hash and update the matching smart contract. In some embodiments, generating the hash can include generating a Call HashID. In addition, the blockchain node 206 can update the smart contract with a call disconnect ACK. An example of an updated smart contract is shown below in Table 7:

**Table 7.**

| | |
|---|---|
| Transaction ID | FTFFNH46FBI4UCHD3CPJBCBIRLA5ECMNBQ3AM4LPSJIYUUOHROGQ |
| Call Hash ID | b2b2ab0b45a107bbdea4fc52d66fea736f13bb7d885910407ed4c983e3aa0512 |
| Origin Member ID | W4SJ7NE7UEYBKMWVNHKVNNEPPVOWNQMN2EVICBR5POGV4OPZEU4JQHL5LY |
| Destination Member ID | YITAU7IM3HZQJIK2ZVZUFNW3H4TEAVVV2ECR3BTYOID7Y7E5HCTBV6LYHI |
| Invite Request SIP Timestamp | DD/MM/YYY hh:mm:ss UTC |
| SIP Call ID - OB | Ez8zrLmfzJXyCO-LN L6aoCo |
| Invite Request signee | W4SJ7NE7UEYBKMWVNHKVNNEPPVOWNQMN2EVICBR5POGV4OPZEU4JQHL5LY |
| Verification Type | Option - Invite or Connect |
| Invite ACK SIP Timestamp | DD/MM/YYY hh:mm:ss UTC |
| SIP Call ID - IB | isbcrcpi2pbymaclztdtzzpbpmd2b6m6tzcp |
| Invite ACK signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Call Connect SIP Timestamp | DD/MM/YYY hh:mm:ss UTC |
| SIP Call ID - IB | isbcrcpi2pbymaclztdtzzpbpmd2b6m6tzcp |
| Call Connect signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Call Connect ACK SIP Timestamp | DD/MM/YYY hh:mm:ss UTC |
| SIP Call ID - OB | Ez8zrLmfzJXyCO-LN L6aoCo |
| Call Connect ACK signee | W4SJ7NE7UEYBKMWVNHKVNNEPPVOWNQMN2EVICBR5POGV4OPZEU4JQHL5LY |
| Verification Layer | 1, 2, or 3 (Pending on the BC nodes credential verification type) |
| Call Connect ACK SIP Timestamp | DD/MM/YYY hh:mm:ss UTC |
| SIP Call ID - OB | Ez8zrLmfzJXyCO-LN L6ao Co |
| Call Disconnect signee | W4SJ7NE7UEYBKMWVNHKVNNEPPVOWNQMN2EVICBR5POGV4OPZEU4JQHL5LY |
| Verification Layer | 1, 2, or 3 (Pending on the BC nodes credential verification type) |

At block 705, the blockchain node 206 may transmit the updated smart contract to the blockchain node 210 of the termination operator network. In some embodiments, if the origin operator network 202 has the requisite functionality, it can request the HashID from the blockchain node 206 and insert it into the SIP header. At block 706, the origin operator network 202 may transmit an SIP call disconnect indication to the termination operator network 204.

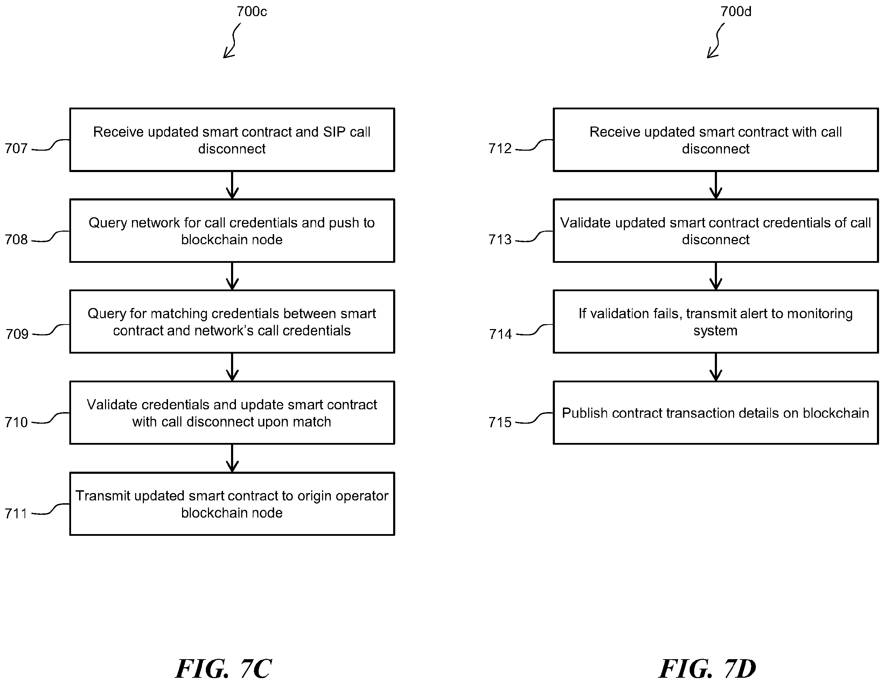

FIGS. 7C-7D are flowcharts of additional example processes 700b and 700b for ending service from a final destination according to example embodiments of the present disclosure.

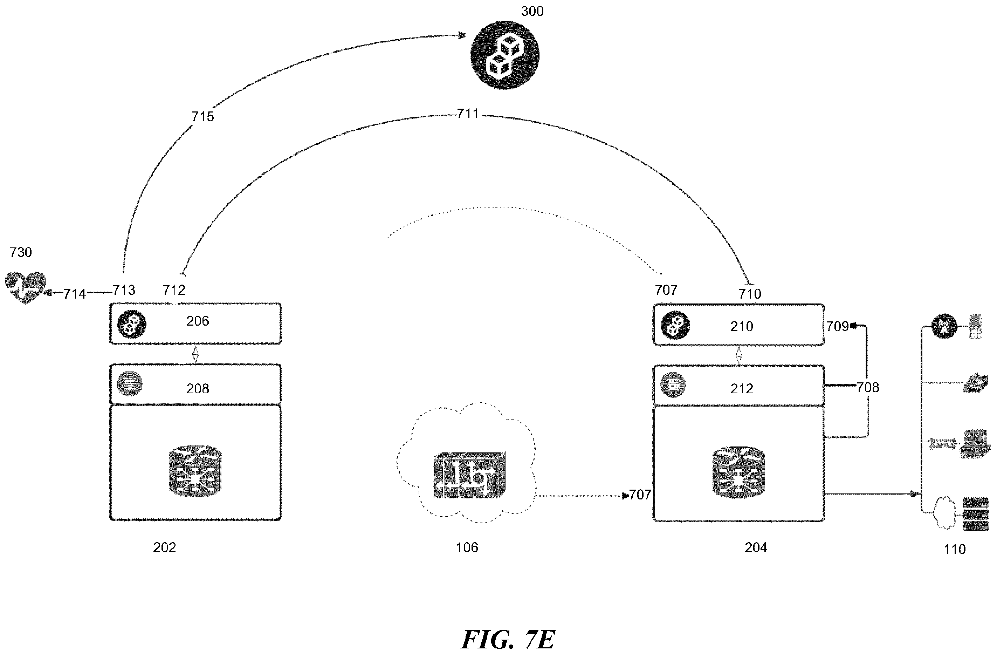

FIG. 7E is an example illustration of how processes 700c and 700d of FIGS. 7C and 7D are performed within the system of FIG. 2 according to example embodiments of the present disclosure.

At block 707, the blockchain node 210 may receive the updated smart contract, and the termination operator network 204 may receive the SIP call disconnect indication. At block 708, the signaling log collector 212 may query the termination operator network 204 for call credentials and push this data to the blockchain node 210. At block 709, the blockchain node 210 may query for matching credentials between the smart contract and the call credentials at the termination operator network 204. In some embodiments, this can include one or more verification layers. For example, a first verification layer can include inserting the Call HashID into the SIP header. If the Call HashID is not present, a second verification layer can include recoding SIP call IDs at the call invite stage. In addition, a third verification layer can include the blockchain node 210 hashing the received dialed and origin numbers on the termination operator network 204 and matching the hash to the Call HashID and the specific call state timestamp of the smart contract. At block 710, upon detecting a match, the blockchain node 206 may validate the credentials and update the smart contract with a Call Disconnect ACK. In some embodiments, if validation fails or the smart contract has not been received, the blockchain node 210 can command the termination operator network 204 to cancel the call and/or alert an administrative monitoring system 730. An example of an updated smart contract is shown below in Table 8:

**Table 8.**

| | |
|---|---|
| Transaction ID | FTFFNH46FBI4UCHD3CPJBCBIRLA5ECMNBQ3AM4LPSJIYUUOHROGQ |
| Call Hash ID | b2b2abOb45a107bbdea4fc52d66fea736f13bb7d885910407ed4c983e3aa0512 |
| Origin Member ID | W4SJ7NE7UEYBKMWVNHKVNNEPPVOWNQMN2EVICBR5POGV4OPZEU4JQHL5LY |
| Destination Member ID | YITAU7IM3HZQJIK2ZVZUFNW3H4TEAVVV2ECR3BTYOID7Y7E5HCTBV6LYHI |
| Invite Request SIP Timestamp | DD/MM/YYY hh:mm:ss UTC |
| SIP Call ID - OB | Ez8z rLm fzJXyCO-LN L6a oCo |
| Invite Request signee | W4SJ7NE7UEYBKMWVNHKVNNEPPVOWNQMN2EVICBR5POGV4OPZEU4JQHL5LY |
| Verification Type | Option - Invite or Connect |
| Invite ACK SIP Timestamp | DD/MM/YYY hh:mm:ss UTC |
| SIP Call ID - IB | isbcrcpi2pbymaclztdtzzpbpmd2b6m6tzcp |
| Invite ACK signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Call Connect SIP Timestamp | DD/MM/YYY hh:mm:ss UTC |
| SIP Call ID - IB | isbcrcpi2pbymaclztdtzzpbpmd2b6m6tzcp |
| Call Connect signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Call Connect ACK SIP Timestamp | DD/MM/YYY hh:mm:ss UTC |
| SIP Call ID- OB | Ez8z rLm fzJXyCO-LN L6a oCo |
| Call Connect ACK signee | W4SJ7NE7UEYBKMWVNHKVNNEPPVOWNQMN2EVICBR5POGV4OPZEU4JQHL5LY |
| Verification Layer | 1, 2, or 3 (Pending on the BC nodes credential verification type) |
| Call Connect ACK SIP Timestamp | DD/MM/YYY hh:mm:ss UTC |
| SIP Call ID- OB | Ez8z rLm fzJXyCO-LN L6a oCo |
| Call Disconnect signee | W4SJ7NE7UEYBKMWVNHKVNNEPPVOWNQMN2EVICBR5POGV4OPZEU4JQHL5LY |
| Verification Layer | 1, 2, or 3 (Pending on the BC nodes credential verification type) |
| Call Connect SIP Timestamp | DD/MM/YYY hh:mm:ss UTC |
| SIP Call ID - IB | isbcrcpi2pbymaclztdtzzpbpmd2b6m6tzcp |
| Call Disconnect ACK signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |

At block 711, the blockchain node 210 may transmit the updated smart contract to the blockchain node 206 of the origin operator.

Process 700d can begin with block 712, where the blockchain node 206 of the origin operator may receive the updated smart contract that includes the call disconnect ACK. At block 713, the blockchain node 206 may validate the updated smart contract credentials. At block 714, if validation fails, the blockchain node 206 may transmit an alert to the monitoring system 730. At block 715, the blockchain node 206 may publish the smart contract transaction details on the blockchain 300 for signature validation and contract seal.

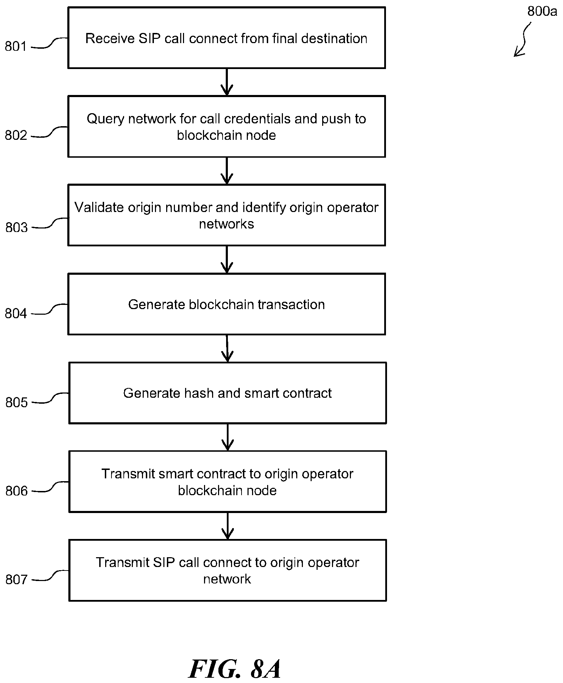

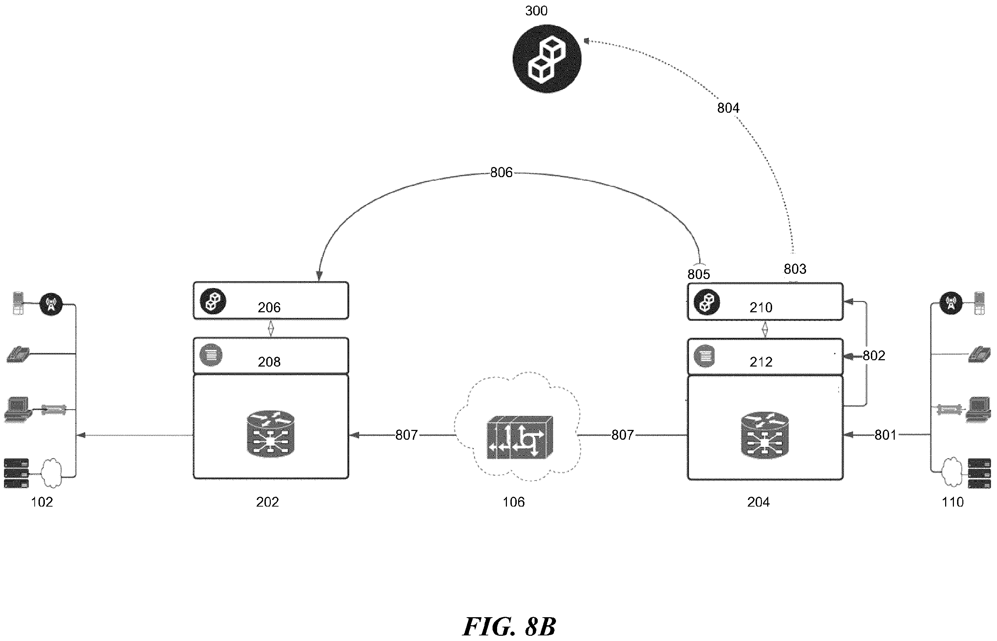

FIG. 8A is a flowchart of an example process 800a for verifying an origin identity according to example embodiments of the present disclosure. FIG. 8B is an example illustration of how the process of FIG. 8A is performed within the system of FIG. 2 according to example embodiments of the present disclosure.

At block 801, the termination operator network 204 may receive an SIP call connect (200 OK) indication from a final destination 110. In some embodiments, the SIP call connect can include dialed number credentials. For example, the origin number can be "1 202 555 1212" and the dialed number can be "34 606 202 707." At block 802, the signaling log collector 212 may query the termination operator network 204 for call credentials and push this data to the blockchain node 210. In some embodiments, if the termination operator network 204 has the requisite functionality, the termination operator network 204 could alternatively push this data to the blockchain node 210 directly.

At block 803, the blockchain node 210 may validate the origin number and identiy the relevant origin operator networks, such as origin operator network 202. In addition, the blockchain node 206 can validate that the dialed number is "1 202 555 1212," that the destination country is the USA (i.e., 1=USA), that the number assigned network is AT&T (i.e., 202=AT&T), and that the origin member ID (i.e., wallet ID of the origin operator network blockchain node 206) is
"W4SJ7NE7UEYBKNPNVNHKVNNEPPVOWNQMN2EVICBR5POGV4OPZEU4JQBL5LY. "

At block 804, the blockchain node 210 may generate a blockchain transaction for the call. In some embodiments, generating the blockchain transaction can include generating a blockchain transaction ID (i.e., TXN_ID) and linking the ID to the associated wallet ID. For example, the transaction ID could be
"DONDK5H6SR4E2KCT2YGGPFBPGUW5ISP4HDAUAR6D25EEUZ4C4UTQ" and the origin member wallet ID is
"YITAU7IM3HZQJIK2ZVZUFNW3H4TEAVVV2ECR3BTYOID7Y7E5HCTBV6LYHI." At block 805, the blockchain node 210 may generate a hash and a smart contract (also referred to as a signature request contract). In some embodiments, the blockchain node 210 can generate a Call HashID based on the dialed number (e.g., 34 606 202 707) and the number of the original caller (e.g., 1 202 555 1212). An example Hashed Call ID could be
"9977db3c810b2e7dc18080110f8cc108elbe02bafaa5524dbc25967ac044aa7b." In some embodiments, as discussed above, the smart contract can operate as a validation tool that validates the identity of the requester through a wallet ID signature. An example smart contract that can be generated by the blockchain node 206 is shown below in Table 9:

**Table 9.**

| | |
|---|---|
| Transaction ID | DONDKSH6SR4E2KCT2YGGPFBPGUW5ISP4HDAUAR6D25EEUZ4C4UTQ |
| Call Hash ID | 9977db3c810b2e7dc18080110f8cc108e1be02bafaa5524dbc25967ac044aa7b |
| Origin Member ID | YITAU7IM3HZQJIK2ZVZUFNW3H4TEAVVV2ECR3BTYOID7Y7E5HCTBV6LYHI |
| Destination Member ID | W4SJ7NE7UEYBKMWVNHKVNNEPPVOWNQMN2EVICBR5POGV4OPZEU4JQHL5LY |
| Call Connect SIP Timestamp | DD/MM/YYY hh:mm:ss UTC |
| SIP Call ID - IB | isbcrcpi2pbymaclztdtzzpbpmd2b6m6tzcp |
| Call Connect signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |
| Verification Type | Origin Verification |

At block 806, the blockchain node 210 may transmit the smart contract to the blockchain node 206, which is connected to the origin operator network 202. In some embodiments, the transmission of the smart contract from the blockchain node 210 to the blockchain node 206 is performed "out of band." In other words, the transmission does not go through any of the intermediaries 106. In some embodiments, if the termination operator network 204 has the requisite functionality, the termination operator network 204 can request the Call HashID (generated at block 805) from the blockchain node 210 and insert it into the SIP header of the call invite. At block 807, the termination operator network 204 transmits the SIP call invite to the origin operator network 202, traversing any intermediary networks.

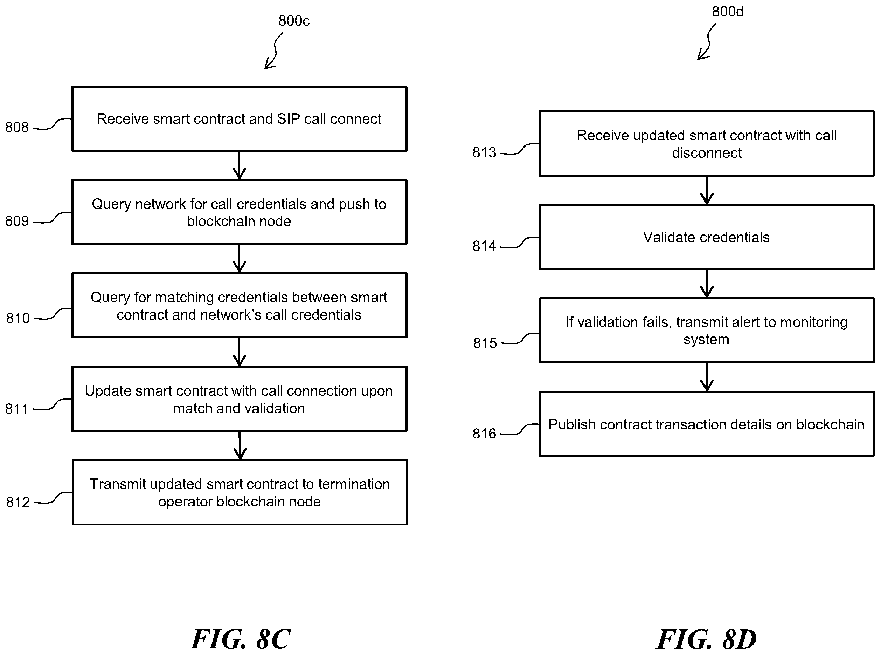

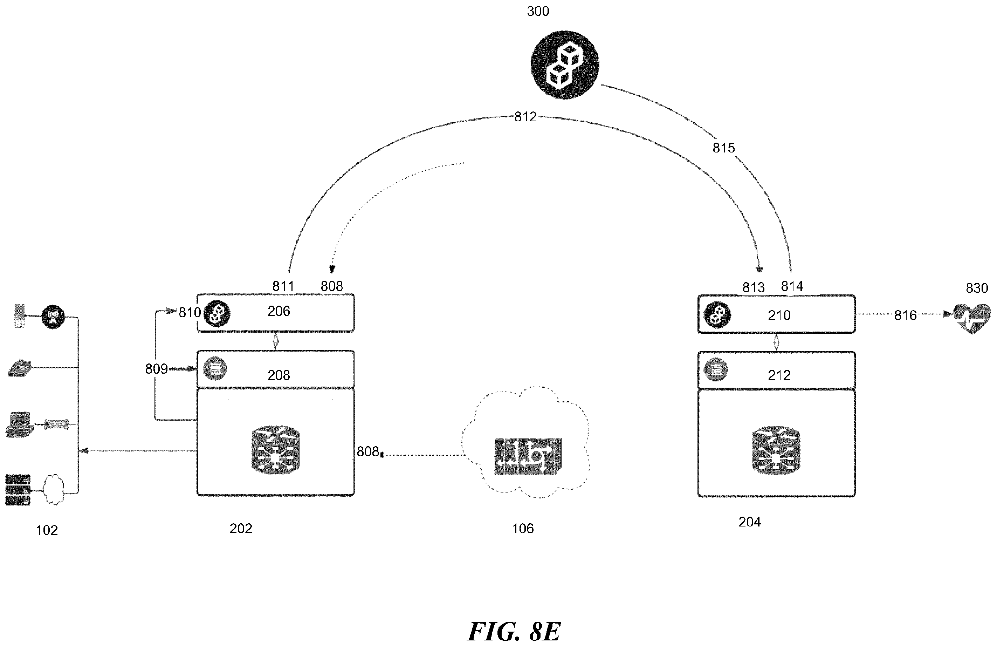

FIGS. 8C-8D are flowcharts of additional example processes 800c and 800d for verifying an origin identity according to example embodiments of the present disclosure. FIG. 8E is an example illustration of how processes 800c and 800d of FIGS. 8C and 8D are performed within the system of FIG. 2 according to example embodiments of the present disclosure.

At block 808 of process 800c, the blockchain node 206 may receive the smart contract from the blockchain node 210, and the origin operator network 202 may receive the SIP Call Connect indication from the termination operator network 204. At block 809, the signaling log collector 208 may query the origin operator network 202 for call credentials and push this data to the blockchain node 206. In some embodiments, if the origin operator network 202 has the requisite functionality, the origin operator network 202 could alternatively push this data to the blockchain node 206 directly.

At block 810, the blockchain node 206 may query for matching credentials between the received smart contract and the call credentials queried at block 808. In some embodiments, this can include one or more verification layers. For example, a first verification layer can include inserting the Call HashID into the SIP header. If the Call HashID is not present, a second verification layer can include verifying the SIP Call ID. In addition, a third verification layer can include the blockchain node 206 hashing the received dialed and origin numbers on the origin operator network 202 and matching the hash to the Call HashID and the specific call state timestamp of the smart contract. At block 811, upon matching and validating of the credentials, the blockchain node 206 may update the smart contract with a Call Connection ACK. An example updated smart contract is shown below in Table 10:

**Table 10.**

| | |
|---|---|
| Transaction ID | DONDK5H6SR4E2KCT2YGGPFBPGUW5ISP4HDAUAR6D25EEUZ4C4UTQ |
| Call Hash ID | 9977db3c810b2e7dc18080110f8cc108e1be02bafaa5524dbc25967ac044aa7b |
| Origin Member ID | YITAU7IM3HZQJIK2ZVZUFNW3H4TEAVVV2ECR3BTYOID7Y7E5HCTBV6LYHI |
| Destination Member ID | W4SJ7NE7UEYBKMWVNHKVNNEPPVOWNQMN2EVICBR5POGV4OPZEU4JQHL5LY |
| Call Connect SIP Timestamp | DD/MM/YYY hh:mm:ss UTC |
| SIP Call ID - IB | isbcrcpi2pbymaclztdtzzpbpmd2b6m6tzcp |
| Call Connect signee | W4SJ7NE7UEYBKMWVNHKVNNEPPVOWNQMN2EVICBR5POGV4OPZEU4JQHL5LY |
| Verification Layer | 1, 2, or 3 (Pending on the BC nodes credential verification type) |
| Verification Type | Origin Verification |
| Call Connect ACK SIP Timestamp | DD/MM/YYY hh:mm:ss UTC |
| SIP Call ID - OB | 2c7ae17d-2597578b-16a4c1-7fe0f33571c0-daf11f59 |
| Call Connect ACK signee | YITAU7IM3HZQJIK2ZVZUFNW3H4TEAVVV2ECR3BTYOID7Y7E5HCTBV6LYHI |
| Verification Layer | 1, 2, or 3 (Pending on the BC nodes credential verification type) |

In some embodiments, if no match is found within the transaction timer limit, as defined by the blockchain node 210, from the time the contract has been received, the blockchain node 210 may update the smart contract with a Failed ACK, an example of which is shown below in Table 11:

**Table 11.**

| | |
|---|---|
| Call Connect ACK SIP Timestamp | 0 |
| SIP Call ID - OB | 0 |
| Call Connect ACK signee | YITAU7IM3HZQJIK2ZVZUFNW3H4TEAVVV2ECR3BTYOID7Y7E5HCTBV6LYHI |
| Verification Layer | 0 |

At block 812, the blockchain node 206 may transmit the updated smart contract to the blockchain node 210 of the termination operator.

Process 800d can begin with block 813, where the blockchain node 210 of the termination operator may receive the updated smart contract that includes the call connection ACK. At block 814, the blockchain node 210 may validate the updated smart contract credentials. At block 815, if validation fails, the blockchain node 210 may transmit an alert to the monitoring system 830. At block 816, the blockchain node 210 may publish the smart contract transaction details on the blockchain 300 for signature validation and contract seal.

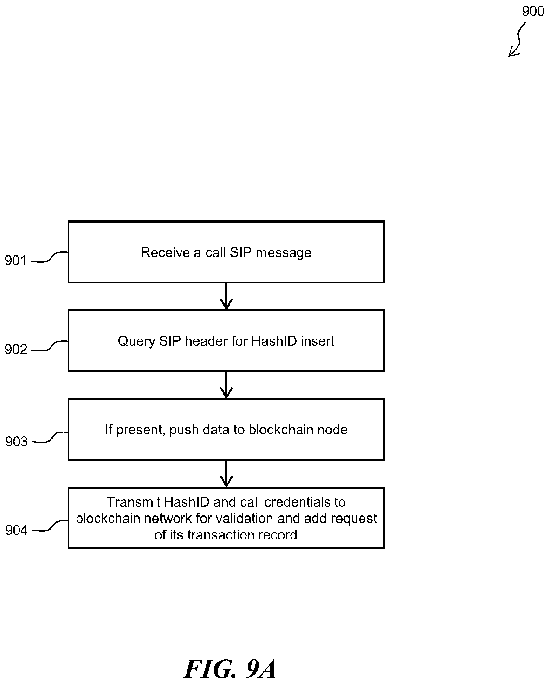

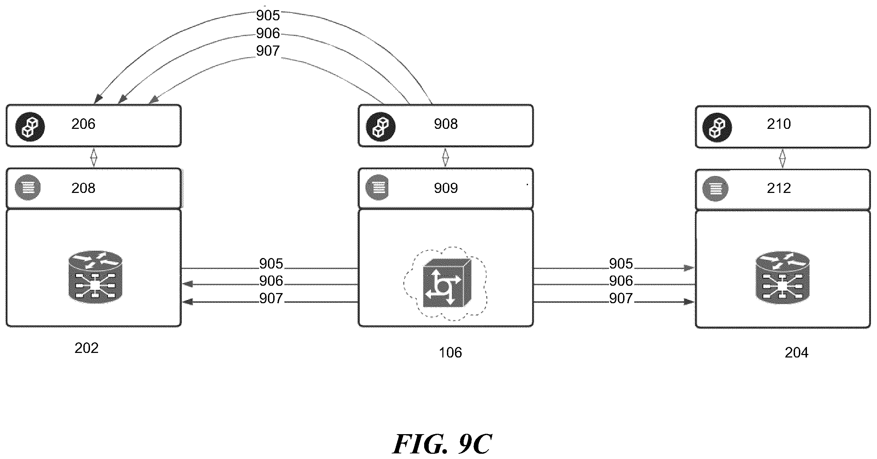

FIG. 9A is a flowchart of an example process 900 for an intermediary joining a contract according to example embodiments of the present disclosure. In some embodiments, process 900 enables an intermediary 106 existing within a transaction to "tag along" in the various processes. It also may include the condition that a HashID insert in the SIP message is present. In some embodiments, an intermediary 106 can be a party existing between an origin operator network 202 and a termination operator network 204 or between other intermediaries 106 within the transaction. In some embodiments, any intermediary 106 (in the embodiments where there are multiple) can join as a "tag along."

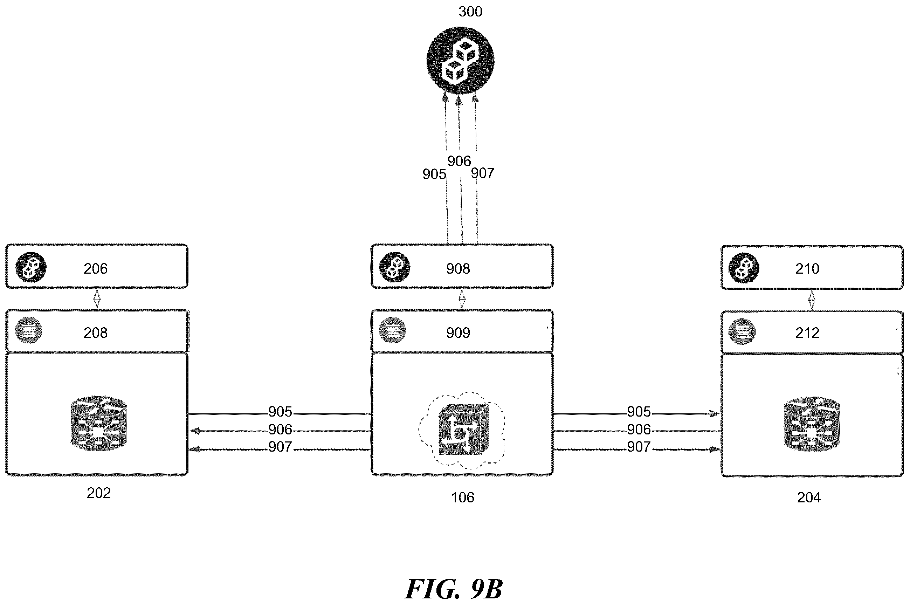

At block 901, the intermediary 106 may receive a call SIP message. At block 902, a signaling log collector 907 (which is part of the intermediary 106, see FIGS. 9B-9D) may query the SIP header for a HashID insert. Signaling log collector 907 can include features and functionality similar to the signaling log collectors of the endpoints, including signaling reader and/or signaling reader oracle elements as described above, for example. At block 903, if the HashID insert is present, the signaling log collector 907 may push the queried data to a blockchain node 908 (which is also part of the intermediary 106, see FIGS. 9B-9D). At block 904, the blockchain node 908 may transmit the HashID and call credentials to the blockchain network 300 for validation and add a request of its transaction record. In some embodiments, the validation can include 1) an authentication of the identity of the intermediary; and 2) an authentication of the HashID and call credential validity against an existing contract. In some embodiments, upon validation, the intermediary transaction record can be annexed to the associated smart contract.

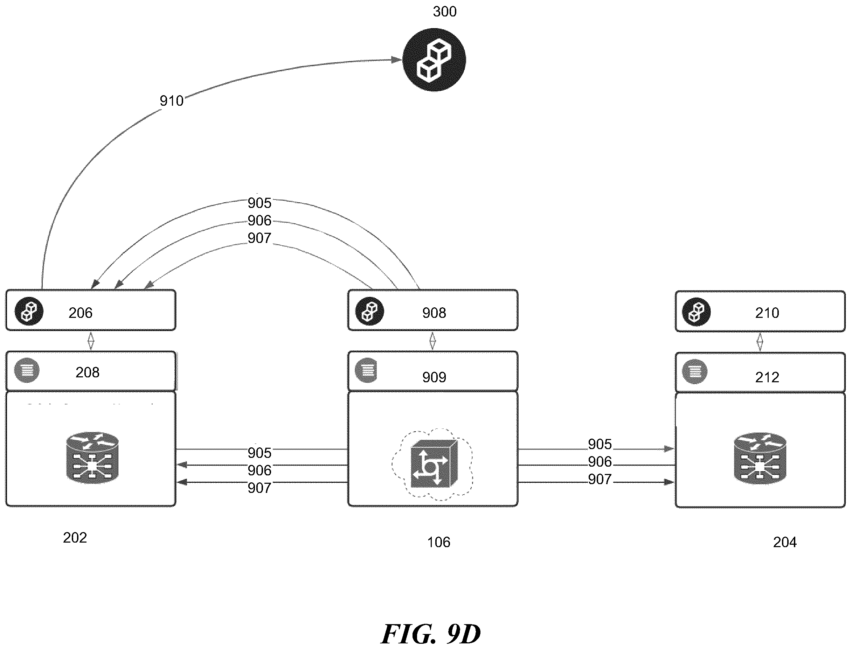

FIGS. 9B-9D are example illustrations of how the process of FIG. 9A is performed within the system of FIG. 2 according to example embodiments of the present disclosure. In some embodiments, there are various stages that take place, such as a call invite/initiation 905, a call connect 906, and a call end/terminate 907. Process 900 can be performed at each of these stages. In FIG. 9D, the "compiled contract" with the various annexed recordings is pushed to the blockchain 300 for signature validations and seal at 910.

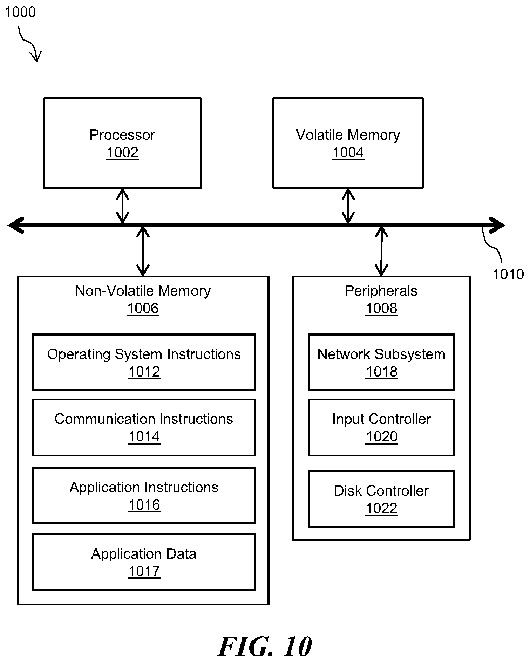

FIG. 10 is a diagram of an example server device 1000 that can be used within system 100 of FIG. 1. Server device 1000 can implement various features and processes as described herein. Server device 1000 can be implemented on any electronic device that runs software applications derived from complied instructions, including without limitation personal computers, servers, smart phones, media players, electronic tablets, game consoles, email devices, etc. In some implementations, server device 1000 can include one or more processors 1002, volatile memory 1004, non-volatile memory 1006, and one or more peripherals 1008. These components can be interconnected by one or more computer buses 1010.

Processor(s) 1002 can use any known processor technology, including but not limited to graphics processors and multi-core processors. Suitable processors for the execution of a program of instructions can include, by way of example, both general and special purpose microprocessors, and the sole processor or one of multiple processors or cores, of any kind of computer. Bus 1010 can be any known internal or external bus technology, including but not limited to ISA, EISA, PCI, PCI Express, USB, Serial ATA, or FireWire. Volatile memory 1004 can include, for example, SDRAM. Processor 1002 can receive instructions and data from a read-only memory or a random access memory or both. Essential elements of a computer can include a processor for executing instructions and one or more memories for storing instructions and data.

Non-volatile memory 1006 can include by way of example semiconductor memory devices, such as EPROM, EEPROM, and flash memory devices; magnetic disks such as internal hard disks and removable disks; magneto-optical disks; and CD-ROM and DVD-ROM disks. Non-volatile memory 1006 can store various computer instructions including operating system instructions 1012, communication instructions 1014, application instructions 1016, and application data 1017. Operating system instructions 1012 can include instructions for implementing an operating system (e.g., Mac OS^{®}, Windows^{®}, or Linux). The operating system can be multi-user, multiprocessing, multitasking, multithreading, real-time, and the like. Communication instructions 1014 can include network communications instructions, for example, software for implementing communication protocols, such as TCP/IP, HTTP, Ethernet, telephony, etc. Application instructions 1016 can include instructions for various applications. Application data 1017 can include data corresponding to the applications.

Peripherals 1008 can be included within server device 1000 or operatively coupled to communicate with server device 1000. Peripherals 1008 can include, for example, network subsystem 1018, input controller 1020, and disk controller 1022. Network subsystem 1018 can include, for example, an Ethernet of WiFi adapter. Input controller 1020 can be any known input device technology, including but not limited to a keyboard (including a virtual keyboard), mouse, track ball, and touch-sensitive pad or display. Disk controller 1022 can include one or more mass storage devices for storing data files; such devices include magnetic disks, such as internal hard disks and removable disks; magneto-optical disks; and optical disks.

The described features can be implemented in one or more computer programs that can be executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., Objective-C, Java), including compiled or interpreted languages, and it can be deployed in any form, including as a stand-alone program or as a module, component, subroutine, or other unit suitable for use in a computing environment.

Suitable processors for the execution of a program of instructions can include, by way of example, both general and special purpose microprocessors, and the sole processor or one of multiple processors or cores, of any kind of computer. Generally, a processor can receive instructions and data from a read-only memory or a random access memory or both. The essential elements of a computer may include a processor for executing instructions and one or more memories for storing instructions and data. Generally, a computer may also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data may include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

To provide for interaction with a user, the features may be implemented on a computer having a display device such as an LED or LCD monitor for displaying information to the user and a keyboard and a pointing device such as a mouse or a trackball by which the user may provide input to the computer.

The features may be implemented in a computer system that includes a back-end component, such as a data server, or that includes a middleware component, such as an application server or an Internet server, or that includes a front-end component, such as a client computer having a graphical user interface or an Internet browser, or any combination thereof. The components of the system may be connected by any form or medium of digital data communication such as a communication network. Examples of communication networks include, e.g., a telephone network, a LAN, a WAN, and the computers and networks forming the Internet.

The computer system may include clients and servers. A client and server may generally be remote from each other and may typically interact through a network. The relationship of client and server may arise by virtue of computer programs running on the respective computers and having a client-server relationship to each other.

One or more features or steps of the disclosed embodiments may be implemented using an API. An API may define one or more parameters that are passed between a calling application and other software code (e.g., an operating system, library routine, function) that provides a service, that provides data, or that performs an operation or a computation.

The API may be implemented as one or more calls in program code that send or receive one or more parameters through a parameter list or other structure based on a call convention defined in an API specification document. A parameter may be a constant, a key, a data structure, an object, an object class, a variable, a data type, a pointer, an array, a list, or another call. API calls and parameters may be implemented in any programming language. The programming language may define the vocabulary and calling convention that a programmer will employ to access functions supporting the API.

In some implementations, an API call may report to an application the capabilities of a device running the application, such as input capability, output capability, processing capability, power capability, communications capability, etc.

While various embodiments have been described above, it should be understood that they have been presented by way of example and not limitation. It will be apparent to persons skilled in the relevant art(s) that various changes in form and detail may be made therein without departing from the scope. In fact, after reading the above description, it will be apparent to one skilled in the relevant art(s) how to implement alternative embodiments. For example, other steps may be provided, or steps may be eliminated, from the described flows, and other components may be added to, or removed from, the described systems. Accordingly, other implementations are within the scope of the following claims.

In addition, it should be understood that any figures which highlight the functionality and advantages are presented for example purposes only. The disclosed methodology and system are each sufficiently flexible and configurable such that they may be utilized in ways other than that shown.

Although the term "at least one" may often be used in the specification, claims and drawings, the terms "a", "an", "the", "said", etc. also signify "at least one" or "the at least one" in the specification, claims and drawings.

Finally, it is the applicant's intent that only claims that include the express language "means for" or "step for" be interpreted under 35 U.S.C. 112(f). Claims that do not expressly include the phrase "means for" or "step for" are not to be interpreted under 35 U.S.C. 112(f).

## Claims

1. A system comprising:
a signaling log collector of a first party in communication with a network, the signaling log collector being configured to:
identify a transaction to be validated, the transaction being between second and third parties on the network;
in response to the identifying, collect signaling data associated with the transaction from the network;
obtain one or more credentials from the signaling data; and
send the one or more credentials to a blockchain node; and
the blockchain node, wherein the blockchain node is in communication with the network, the signaling log collector, and a blockchain and configured to:
generate a smart contract tender for the transaction, the smart contract tender including at least one primary credential defining validation process participation requirements; and
transmit the smart contract tender to at least one additional blockchain node connected to the network.

2. The system of claim 1, wherein the signaling log collector and the blockchain node are installed on a cloud.

3. The system of claim 1, wherein the signaling log collector and the blockchain node are installed at a premises associated with an intermediary to the transaction on the network.

4. The system of any preceding claim, wherein generating the smart contract tender comprises including information from a digital wallet associated with the first party.

5. The system of any preceding claim, wherein generating the contract tender comprises including information from a hierarchical digital identity associated with the first party.

6. The system of any preceding claim, wherein the blockchain node is further configured to read data from the blockchain and thereby determine that the at least one additional blockchain node has validated the transaction.

7. The system of claim 6, wherein the data from the blockchain includes indicia of participation by the at least one additional blockchain node comprising at least the at least one primary credential.

8. The system of any preceding claim, wherein the smart contract tender further includes at least one secondary credential defining additional validation information.

9. The system of claim 8, wherein the blockchain node is further configured to validate the transaction using responsive data including the at least one primary credential and the at least one secondary credential originating from the at least one additional blockchain node.

10. A system comprising:
a blockchain node in communication with a network and a blockchain and configured to:
receive a smart contract tender from an additional blockchain node connected to the network, the smart contract tender including at least one primary credential defining validation process participation requirements for a transaction between parties separate from the blockchain node and the additional blockchain node; and
a signaling log collector, wherein the signaling log collector is in communication with the network and the blockchain node and configured to:
in response to the receiving the smart contract tender, determine a match between each of the at least one primary credentials and equivalent blockchain node credentials;
in response to the match, query the network for one or more credentials associated with the transaction; and
send the one or more credentials to the blockchain node;
wherein the blockchain node is further configured to:
query the one or more credentials and the smart contract tender to identify one or more matching credentials;
update the smart contract with an acknowledgement indication; and
provide the updated smart contract to the additional blockchain node.

11. The system of claim 10, wherein the signaling log collector and the blockchain node are installed on a cloud.

12. The system of claim 10, wherein the signaling log collector and the blockchain node are installed at a premises associated with an intermediary to the transaction on the network.

13. The system according to any of claims 10 to 12, wherein the smart contract tender further includes at least one secondary credential defining additional validation information.

14. The system of claim 13, wherein the signaling log collector is further configured to determine a secondary match between at least one of the secondary credentials and equivalent blockchain node credentials, and the query is performed in further response to the secondary match.

15. The system of claim 14, wherein the signaling log collector is further configured to determine at least one mismatch between at least one of the primary credentials or secondary credentials and equivalent blockchain node credentials and refrain from the query in response to the at least one mismatch.

16. The system according to any of claims 10 to 15, wherein the signaling log collector is further configured to obtain the equivalent credentials from a hierarchical digital identity associated with the blockchain node.

17. The system of claim 13, wherein the signaling log collector is further configured to obtain the equivalent credentials from a digital wallet associated with the blockchain node.

18. The system according to any of claims 10 to 17, wherein the blockchain node is further configured to monitor the network and update the smart contract tender with additional information about the transaction obtained from monitoring the network.

19. The system according to any of claims 10 to 18, wherein the blockchain node is configured to update the smart contract tender with a failure acknowledgement if a match is not identified within a predetermined time period after receiving the smart contract tender.

20. A computer-implemented method for validating a transaction performed by a processor located in a network comprising:
receiving one or more credentials associated with a network transaction between second and third parties from a signaling log collector of a first party;
generating a smart contract tender for the transaction, the smart contract tender including at least one primary credential defining validation process participation requirements; and
transmitting the smart contract tender to at least one blockchain node connected to the network.
